# EUROPÄISCHE PATENTSCHRIFT

(11) **EP 2 922 774 B1**
(45) Veröffentlichungstag und Bekanntmachung des Hinweises auf die Patenterteilung: **05.12.2018**
(21) Anmeldenummer: 13815382.0
(22) Anmeldetag: 26.11.2013
(51) Int. Cl.: B65G 1/137

(54) **ANORDNUNG UND VERFAHREN ZUR REIHENFOLGERICHTIGEN KOMMISSIONIERUNG UND BEREITSTELLUNG VON WAREN SOWIE COMPUTERPROGRAMM**
DEVICE AND METHOD FOR ORDER PICKING AND PROVIDING PRODUCTS IN A CORRECT ORDER
DISPOSITIF ET PROCÉDÉ POUR PRÉPARER DES COMMANDES ET DÉLIVRER DES MARCHANDISES DANS L'ORDRE VOULU

(30) Priorität: 26.11.2012 DE 102012111412
(43) Veröffentlichungstag der Anmeldung: 30.09.2015
(73) Patentinhaber: BSS Bohnenberg GmbH, 42697 Solingen (DE)
(72) Erfinder: BOHNENBERG, Harald, 40597 Düsseldorf (DE); GRÄB, Martin, 58239 Schwerte (DE)
(74) Vertreter: Grape & Schwarzensteiner
(86) Internationale Anmeldenummer: PCT/EP2013/074772
(87) Internationale Veröffentlichungsnummer: WO 2014/080041

(56) Entgegenhaltungen:
- EP-A2- 0 396 960
- EP-A2- 2 295 351
- WO-A1-2011/043655
- DE-A1-102010 044 614
- GB-A- 2 107 690
- US-A- 4 527 937
- US-A- 5 478 183

## Beschreibung

Die vorliegende Erfindung betrifft eine Anordnung und ein Verfahren zur reihenfolgerichtigen Kommissionierung und Bereitstellung von Waren, insbesondere von quaderförmigem Stückgütern, wie Behältern, Kartons oder (Getränke-)Kisten, zu wenigstens einem oder an wenigstens einen Palettierplatz, sowie ein dazugehöriges Computerprogramm.

Vorrichtungen zur Kommissionierung und Bereitstellung von Waren bzw. Kolli sind allgemein bekannt. Derartige Vorrichtungen bestehen aus horizontal verlaufenden und parallel nebeneinander angeordneten Transportbahnen, durch welche die Waren an einem wareneingangsseitigen Ende vereinzelt aufgenommen und zu deren warenausgangsseitigen Ende bewegt werden. Von dem warenausgangsseitigen Ende der horizontal verlaufenden Transportbahnen werden die Waren an eine etwa senkrecht zu den Transportbahnen angeordnete, ebenfalls horizontal verlaufende gemeinsame Transportbahn übergeben und zu deren warenausgangseitigen Ende, welcher wenigstens ein Palettierplatz zugeordnet ist, bewegt. Diese Vorrichtungen haben sich allesamt jedoch in der Praxis als verhältnismäßig nachteilig erwiesen. So ist es bei diesen Vorrichtungen bis heute unbedingt erforderlich, die Waren, zum Beispiel mittels Strichkodierung, zu kennzeichnen, identifizierbar zu machen und ständig zu erfassen, um deren Transport zu und anschließend an dem wenigstens einen Palettierplatz zu überwachen, eine geforderte Reihenfolge des Eintreffens an dem Palettierplatz einzuhalten, Verzögerungen und sonstige Unregelmäßigkeiten während des Transportes bis hin zu deren Verbleib abzubilden und nachzuverfolgen, etc. Dies gestaltet sich besonders investitions- und betriebs- sowie personalkostenintensiv und damit ausgesprochen kostenaufwendig. Weiterhin erfordern diese Vorrichtungen sämtlich einen enorm hohen Platzbedarf infolge der Anordnung sämtlicher Transportbahnen in einer Ebene. Schließlich besteht ein großes Problem bei sämtlichen dieser Vorrichtungen in der Zusammenführung der Waren von den horizontal verlaufenden und parallel nebeneinander angeordneten Transportbahnen auf die gemeinsame Transportbahn, welche die Waren zu dem wenigstens einen Palettierplatz weiterbefördert. Sofern mehrere Palettierplätze vorgesehen sind, zu welchen die Waren verbracht werden sollen, sind zudem weitere Weichenplätze erforderlich, um die Waren wiederum von der gemeinsamen Transportbahn auf eine Vielzahl von weiteren horizontal verlaufenden Transportbahnen zu verteilen. Die Zusammenführung der Waren auf die gemeinsame Transportbahn hat große Stauungen der Waren bei deren Beförderung zu dem wenigstens einen Palettierplatz zur Folge. Dies führt zu erheblichen Zeitverlusten, was wiederum die Kapazität wie gleichermaßen die Leistungsfähigkeit dieser Vorrichtungen bei der Warenumsetzung in der Praxis maßgeblich verschlechtert.

Die WO 2009/089159 A2 beschreibt eine gattungsgemäße Anordnung mit einer Bahnweiche, dessen warenausgangsseitiges Ende in eine horizontal verlaufende Transportbahn mündet, wodurch die Waren der horizontal verlaufenden Transportbahn zugeleitet werden.

Im Folgenden ist unter den Formulierungen "horizontal" bzw. "horizontal verlaufend" gleichbedeutend die Formulierung "horizontal oder im Wesentlichen horizontal verlaufend" zu verstehen ist. Auch ist im Folgenden unter den Formulierungen "vertikal" bzw. "vertikal verlaufend" gleichbedeutend die Formulierung "vertikal oder im Wesentlichen vertikal verlaufend" zu verstehen ist.

Der vorliegenden Erfindung liegt daher die Aufgabe zugrunde, eine Anordnung und ein Verfahren zur reihenfolgerichtigen Kommissionierung und Bereitstellung von Waren bzw. Kolli zur Verfügung zu stellen, welche konstruktiv besonders einfach, kompakt und platzsparend ausgestaltet und zugleich ein hohes Leistungsvermögen bei der Warenumschlagung aufweist, sowie ein dazugehöriges Computerprogramm bereitzustellen.

Diese Aufgabe wird in vorrichtungstechnischer Hinsicht auf überraschend einfache Weise durch die Merkmale des Anspruchs 1 gelöst.

Durch die Ausgestaltung der erfindungsgemäßen Anordnung mit einer Vorrichtung zur reihenfolgerichtigen Kommissionierung und Bereitstellung von Waren, insbesondere von quaderförmigem Stückgütern, wie Behältern, Kartons oder (Getränke-)Kisten, und mit wenigstens einem Palettierplatz, umfassend mindestens zwei horizontal oder im Wesentlichen horizontal verlaufende und übereinander angeordnete Transportbahnen, durch welche die Waren an einem wareneingangsseitigen Ende der mindestens zwei horizontal verlaufenden Transportbahnen vereinzelt aufnehmbar und zu einem warenausgangsseitigen Ende der mindestens zwei horizontal verlaufenden Transportbahnen bewegbar sind, und mindestes eine vertikal oder im Wesentlichen vertikal verlaufende Transportbahn, an welche die Waren von dem warenausgangsseitigen Ende der mindestens zwei horizontal verlaufenden Transportbahnen an ein wareneingangsseitiges Ende der mindestens einen vertikal verlaufenden Transportbahn übergebbar, in welcher die Waren von den mindestens zwei horizontal verlaufenden Transportbahnen zusammenführbar und von der mindestens einen vertikal verlaufenden Transportbahn zu einem warenausgangseitigen Ende der mindestens einen vertikalen Transportbahn, welches dem einen Palettierplatz oder einem der Palettierplätze zugeordnet ist, vertikal nach oben in Förderrichtung zu dem zugeordneten Palettierplatz bewegbar und an den Palettierplatz abgebbar sind, wobei die sämtlichen horizontal oder im Wesentlichen horizontal verlaufenden Transportbahnen und die mindestens eine vertikal oder im Wesentlichen vertikal verlaufende Transportbahn derart ausgebildet sind, dass der Weg einer Ware von dem wareneingangsseitigen Ende jeder der mindestens zwei horizontal verlaufenden Transportbahnen zu dem warenausgangseitigen Ende einer der mindestens einen vertikalen Transportbahn des zugeordneten Palettierplatzes von gleicher Länge ist, wird eine besonders einfache, zudem ausgesprochen kompakte und sehr platzsparende Bauweise der Vorrichtung erreicht. Dies lässt sich insbesondere durch eine matrixförmige Anordnung der horizontal verlaufenden und übereinander angeordneten Transportbahnen und der vertikal verlaufenden Transportbahn/en zueinander erhalten, wodurch der vorhandene, die erfindungsgemäße Vorrichtung aufzunehmende Raum nahezu vollständig ausgenutzt werden kann. Eine solche Ausnutzung des vorhandenen Raumes auch in der Höhe lässt sich erst durch die Ausbildung und Anordnung der erfindungsgemäßen Vorrichtung in Form einer Matrix erreichen. Gleichzeitig weist die erfindungsgemäße Vorrichtung nicht zuletzt aufgrund der Ausbildung und Anordnung der horizontal und vertikal verlaufenden Transportbahnen in ausgesprochener Weise zu einer erheblich optimierten Auslastung und gleichzeitig einem wesentlich verbesserten Leistungsvermögen bei der Warenumschlagung selbst auf. So lassen sich beispielsweise mit der erfindungsgemäßen Vorrichtung ohne weiteres von bis zu mehreren 10.000 Waren bzw. Kolli in der Stunde umschlagen, und zwar unter erheblicher Reduzierung der Investitions- und Betriebs- sowie Personalkosten.

Vorteilhafte konstruktive Einzelheiten der erfindungsgemäßen Anordnung sind in den Ansprüchen 2 bis 20 beschrieben.

So liegt es im Rahmen der Erfindung, dass die mindestens zwei horizontal oder im Wesentlichen horizontal verlaufenden Transportbahnen und die mindestens eine vertikal oder im Wesentlichen vertikal verlaufende Transportbahn nach Anspruch 2 durch bauliche Ausgestaltung verlängert sind. Die Verlängerung der Transportbahn erfolgt mithin physisch, d.h. rein konstruktiv.

Entsprechend den Merkmalen nach Anspruch 3 ist die obere Transportbahn gegenüber der unteren Transportbahn von den mindestens zwei horizontal verlaufenden Transportbahnen, die unmittelbar übereinander benachbart angeordnet sind, um eine Transportbahnverlängerung mit einer Länge, welche der Länge der vertikal verlaufenden Transportbahn zwischen dem warenausgangsseitigen Ende der unteren Transportbahn und dem warenausgangsseitigen Ende der oberen Transportbahn entspricht, verlängert, wobei die Transportbahnverlängerung dem wareneingangsseitigen Ende der oberen Transportbahn, an welchem die Ware aufnehmbar ist, vorgeordnet ist.

In vorteilhafter Weise ist die mindestens eine vertikal verlaufende Transportbahn nach Anspruch 4 um eine Transportbahnverlängerung mit einer Länge, welche der Länge der horizontal verlaufenden Transportbahn, die dem wareneingangsseitigen Ende der vertikalen Transportbahn zugeordnet ist, von deren wareneingangsseitigen Ende zu deren warenausgangseitigen Ende entspricht, verlängert, wobei die Transportbahnverlängerung dem wareneingangsseitigem Ende der vertikal verlaufenden Transportbahn, an welches die Ware von dem warenausgangsseitigen Ende der zugeordneten horizontal verlaufenden Transportbahn übergebbar ist, vorgeordnet ist.

Von großem Interesse sind die konstruktiven Maßnahmen des Anspruchs 5, wonach die mindestens zwei horizontal oder im Wesentlichen horizontal verlaufenden Transportbahnen und die zwei oder mehreren vertikalen oder im Wesentlichen vertikal verlaufenden Transportbahnen jeweils zueinander im Wesentlichen baugleich ausgebildet und durch eine, insbesondere computergestützte, Einrichtung zur Simulation verlängerbar sind. Durch eine solche Ausbildung ist eine sogenannte gedankliche oder auch quasi fiktive Verlängerung der Transportbahnen ermöglicht, wodurch sich die Baulänge und/oder Bauhöhe der erfindungsgemäßen Vorrichtung, die durch eine physische Ausgestaltung entsprechend Anspruch 2 erhalten wird, erheblich reduzieren lassen.

Von ganz besonders großer Bedeutung für eine zusätzliche Vereinfachung der Bauweise der erfindungsgemäßen Vorrichtung insgesamt und gleichzeitige Sicherstellung einer reihenfolgerichtigen Kommissionierung und Bereitstellung der Waren sind die Maßnahmen des Anspruchs 6. Danach sind die mindestens zwei horizontal oder im Wesentlichen horizontal verlaufenden Transportbahnen und die mindestens eine vertikal oder im Wesentlichen vertikal verlaufende Transportbahn in zur Aufnahme jeweils einer Ware vorgesehene und in Förderrichtung kontinuierlich bewegbare Fenster von gleicher Anzahl unterteilt. Mit einer solchen sogenannten "Fenster"-Technologie lassen sich der Investitions-, Betriebs-, Personal-, Zeit- und Kostenaufwand herkömmlicher zum Einsatz gebrachter Vorrichtung zudem erheblich vermindern. So sind gesonderte, sehr kostenintensive Maßnahmen etwa zur Identifizierung und Verfolgung der Ware/n selbst, wie eine Strichkodierung oder dergleichen, nicht notwendig.

In diesem Zusammenhang ist erfindungsgemäß nach Anspruch 7 vorgesehen, dass die obere Transportbahn gegenüber der unteren Transportbahn von den mindestens zwei horizontal oder im Wesentlichen horizontal verlaufenden Transportbahnen, die unmittelbar übereinander benachbart angeordnet sind, um eine Anzahl von zusätzlichen Fenstern, welche genau der Anzahl von Fenstern der vertikal verlaufenden Transportbahn zwischen dem warenausgangsseitigen Ende der unteren Transportbahn und dem warenausgangsseitigen Ende der oberen Transportbahn entspricht, verlängert ist, wobei die zusätzlichen Fenster zur Transportbahnverlängerung dem wareneingangsseitigen Ende der oberen Transportbahn, an welchem die Ware aufnehmbar ist, vorgeordnet sind.

Weiter liegt es im Rahmen der Erfindung, dass die mindestens eine vertikal oder im Wesentlichen vertikal verlaufende Transportbahn nach Anspruch 8 zur Transportbahnverlängerung um eine Anzahl von zusätzlichen Fenstern, welche genau der Anzahl von Fenstern der horizontal verlaufenden Transportbahn, die dem wareneingangsseitigen Ende der vertikalen Transportbahn zugeordnet ist, von deren wareneingangsseitigen Ende zu deren warenausgangseitigen Ende entspricht, verlängert ist, wobei die zusätzlichen Fenster dem wareneingangsseitigem Ende der vertikal verlaufenden Transportbahn, an welches die Ware von dem warenausgangsseitigen Ende der zugeordneten horizontal verlaufenden Transportbahn übergebbar ist, vorgeordnet sind.

Darüber hinaus liegt es im Rahmen der Erfindung, dass die sämtlichen horizontal und vertikal verlaufenden Transportbahnen oder die Fenster der sämtlichen horizontal und vertikal verlaufenden Transportbahnen nach Anspruch 9 von dem wareneingangsseitigen Ende der wenigstens zwei horizontal verlaufenden Transportbahnen bis zu dem wenigstens einen Palettierplatz stetig, insbesondere mit gleicher Fördergeschwindigkeit, bewegbar sind.

Entsprechend Anspruch 10 weisen die Fenster der sämtlichen horizontal und vertikal verlaufenden Transportbahnen von dem wareneingangsseitigen Ende der wenigstens zwei horizontal verlaufenden Transportbahnen bis zu dem wenigstens einen Palettierplatz eine Fensterlänge, die aus einer Taktlänge und der Fördergeschwindigkeit einstellbar ist, auf.

Bevorzugt weisen die Fenster nach Anspruch 11 eine Fensterlänge von etwa 0,1 bis 10,0 m, insbesondere von etwa 1,0 bis 3,0 m, und vorzugsweise von etwa 1,5 m auf.

Nach Anspruch 12 ist erfindungsgemäß vorgesehen, dass die sämtlichen horizontal und vertikal verlaufenden Transportbahnen durch eine Einrichtung zur Steuerung, Erzeugung eines Taktes und einer Taktnummer sowie Zuteilung der Taktnummer an jedes Fenster steuerbar sind, durch welche jedes Fenster der sämtlichen horizontal und vertikal verlaufenden Transportbahnen von dem wareneingangsseitigen Ende der wenigstens zwei horizontal verlaufenden Transportbahnen bis zu dem wenigstens einen Palettierplatz individualisierbar ist.

In vorteilhafter Weise ist den sämtlichen horizontal und vertikal verlaufenden Transportbahnen nach Anspruch 13 eine Einrichtung zur Taktzählung zugeordnet, durch welche die Taktnummer von jedem Fenster der sämtlichen horizontal und vertikal verlaufenden Transportbahnen von dem wareneingangsseitigen Ende der wenigstens zwei horizontal verlaufenden Transportbahnen bis zu dem wenigstens einen Palettierplatz identifizierbar ist.

Zudem liegt es im Rahmen der Erfindung, die mindestens zwei horizontal oder im Wesentlichen horizontal verlaufenden und übereinander angeordneten Transportbahnen nach Anspruch 14 abschnittsweise in zwei oder mehrere Transportbahnsegmente zu unterteilen. Die Transportbahnsegmente sind vorzugsweise in Blöcke bzw. Reihen ausgebildet. Die Transportbahnsegmente sind parallel nebeneinander angeordnet. Durch eine solche Unter- bzw. Aufteilung der horizontal verlaufenden Transportbahnen oder einzelner Abschnitte davon in einem Bereich, welcher dem Lagerbereich etwa mit einem mehrstöckigen Lager- oder Durchlaufregal zugeordnet bzw. zu diesem benachbart ist, lassen sich die von den Waren zurückzulegenden Wege zwischen dem wareneingangseitigen Ende der horizontal verlaufenden Transportbahnen und den vertikal verlaufenden Transportbahnen 16 verkürzen.

In alternativer oder kumulativer Ausgestaltung dazu kann es weiter zweckmäßig sein, dass nach Anspruch 15 mindestens eine oder zwei weitere horizontal verlaufende und übereinander angeordnete Transportbahn/en neben den mindestens zwei horizontal verlaufenden und übereinander angeordneten Transportbahnen, insbesondere parallel zueinander, angeordnet und mit den mindestens zwei horizontal verlaufenden Transportbahnen zusammenführbar ist/sind.

Entsprechend Anspruch 16 ist/sind die zwei oder mehreren Transportbahnsegmente und/oder die mindestens eine oder zwei weitere/n horizontal verlaufenden und übereinander angeordnete/n Transportbahn/en erfindungsgemäß um eine Zusammenführungsbahnverlängerung mit einer Länge, welche der Länge zwischen dem Lagerbereich der Transportbahnsegmente oder der/den weiteren Transportbahn/en und der Zusammenführung entspricht, oder um eine Anzahl von zusätzlichen Fenstern, welche genau der Anzahl von Fenstern zwischen dem Lagerbereich der Transportbahnsegmente oder der/den weiteren horizontal verlaufenden Transportbahn/en und der Zusammenführung entspricht, verlängerbar. Dabei ist die Zusammenführungsbahnverlängerung dem wareneingangsseitigen Ende des/der Transportbahnsegmente/s und/oder der/den weitere/n horizontal verlaufenden Transportbahn/en, an welchem die Ware aufnehmbar ist, vorgeordnet.

Als ausgesprochen vorteilhaft hat sich in der Praxis erwiesen, den sämtlichen horizontal und vertikal verlaufenden Transportbahnen nach Anspruch 17 eine Einrichtung zur Überprüfung der Taktnummer von jedem Fenster zuzuordnen, welche die Taktnummer von jedem Fenster an dem wareneingangsseitigen Ende der horizontal verlaufenden Transportbahnen mit der Taktnummer der Transportbahnsegmente und/oder der mindestens einen oder zwei weiteren horizontal verlaufenden Transportbahn/en im Bereich von deren Zusammenführung und/oder an dem warenausgangsseitigen Ende der horizontalen Transportbahnen mit der Taktnummer von jedem Fenster an dem wareneingangsseitigen Ende der mindestens einen vertikalen Transportbahn vergleicht.

Die mindestens zwei im Wesentlichen horizontal verlaufenden Transportbahnen sind nach Anspruch 18 vorzugsweise von deren wareneingangsseitigen Ende hin zu deren warenausgangsseitigen Ende in einer Neigung mit einem Winkel von bis zu etwa 15°, insbesondere zwischen etwa 2° und 10° und vorzugsweise zwischen etwa 3 ° und 7° angeordnet.

Jedem Palettierplatz ist nach Anspruch 19 mindestens eine vertikal verlaufende Transportbahn zugeordnet.

Entsprechend den Maßnahmen des Anspruchs 20 ist/sind die mindestens zwei horizontal verlaufenden Transportbahnen bevorzugt als, insbesondere teilweise angetriebene, Rollenbahnfördereinrichtung und/oder die mindestens eine vertikal verlaufende Transportbahn vorteilhafterweise als lineare Hubfördereinrichtung und/oder Spiral- oder Schraubenfördereinrichtung ausgebildet.

Diese Aufgabe wird in verfahrenstechnischer Hinsicht auf überraschend einfache Weise durch die Merkmale des Anspruchs 21 gelöst.

Durch die Ausgestaltung des erfindungsgemäßen Verfahrens zur reihenfolgerichtigen Kommissionierung und Bereitstellung von Waren, insbesondere von quaderförmigem Stückgütern, wie Behältern, Kartons oder (Getränke-)Kisten, zu wenigstens einem oder an wenigstens einen Palettierplatz, insbesondere zur Verwendung einer Vorrichtung nach einem der vorhergehenden Ansprüche, wobei die Waren an einem wareneingangsseitigen Ende von mindestens zwei horizontal verlaufenden und übereinander angeordneten Transportbahnen vereinzelt aufgenommen und zu einem warenausgangsseitigen Ende der mindestens zwei horizontal verlaufenden Transportbahnen bewegt werden, und von dem warenausgangsseitigen Ende der mindestens zwei horizontal verlaufenden Transportbahnen an ein wareneingangsseitiges Ende der mindestens einen vertikal verlaufenden Transportbahn übergeben, von den mindestens zwei horizontal verlaufenden Transportbahnen zusammengeführt und von der mindestens einen vertikal verlaufenden Transportbahn zu einem warenausgangseitigen Ende der mindestens einen vertikalen Transportbahn, welches dem einen Palettierplatz oder einem der Palettierplätze zugeordnet ist, vertikal nach oben in Förderrichtung zu dem zugeordneten Palettierplatz bewegt und an den Palettierplatz abgegeben werden, wobei die sämtlichen horizontal verlaufenden Transportbahnen und die mindestens eine vertikal verlaufende Transportbahn derart ausgebildet werden, dass der Weg einer Ware von dem wareneingangsseitigen Ende jeder der mindestens zwei horizontal verlaufenden Transportbahnen zu dem warenausgangseitigen Ende einer der mindestens einen vertikalen Transportbahn des zugeordneten Palettierplatzes von gleicher Länge ist, lässt ein gleichermaßen einfaches wie platzsparendes Verfahren infolge einer matrixförmigen Bewegung der Waren über die horizontal verlaufenden und übereinander angeordneten Transportbahnen und die vertikal verlaufenden Transportbahnen erhalten. Gleichzeitig ermöglicht das erfindungsgemäße Verfahren eine verbesserte Auslastung und gleichzeitig ein wesentlich verbessertes Leistungsvermögen bei der Warenumschlagung selbst. So lassen sich beispielsweise mit der erfindungsgemäßen Vorrichtung ohne weiteres von bis zu mehreren 10.000 Waren bzw. Kolli in der Stunde umschlagen. Schließlich führt das erfindungsgemäße Verfahren zu einer erheblichen Reduzierung der Investitions- und Betriebs- sowie Personalkosten.

Von ganz besonders großer Bedeutung sind dabei die Maßnahmen des Anspruchs 22. Demnach werden die mindestens zwei horizontal verlaufenden Transportbahnen und die mindestens eine vertikal verlaufende Transportbahn in zur Aufnahme jeweils einer Ware vorgesehene und in Förderrichtung kontinuierlich bewegbare Fenster von gleicher Anzahl unterteilt.

Es liegt im Rahmen der Erfindung, die obere Transportbahn gegenüber der unteren Transportbahn von den mindestens zwei horizontal verlaufenden Transportbahnen, die unmittelbar übereinander benachbart angeordnet sind, nach Anspruch 23 um eine Anzahl von zusätzlichen Fenstern, welche genau der Anzahl von Fenstern der vertikal verlaufenden Transportbahn zwischen dem warenausgangsseitigen Ende der unteren Transportbahn und dem warenausgangsseitigen Ende der oberen Transportbahn entspricht, zu verlängern, wobei die zusätzlichen Fenster dem wareneingangsseitigen Ende der oberen Transportbahn, an welchem die Ware aufgenommen wird, vorgeordnet werden.

In vorteilhafter Weise wird die mindestens eine vertikal verlaufende Transportbahn nach Anspruch 24 um eine Anzahl von zusätzlichen Fenstern, welche genau der Anzahl von Fenstern der horizontal verlaufenden Transportbahn, die dem wareneingangsseitigen Ende der vertikalen Transportbahn zugeordnet ist, von deren wareneingangsseitigen Ende zu deren warenausgangseitigen Ende entspricht, verlängert. Dabei werden die zusätzlichen Fenster dem wareneingangsseitigem Ende der vertikal verlaufenden Transportbahn, an welches die Ware von dem warenausgangsseitigen Ende der zugeordneten horizontal verlaufenden Transportbahn übergeben wird, vorgeordnet.

Weiterhin ist erfindungsgemäß vorgesehen, dass die sämtlichen horizontal und vertikal verlaufenden Transportbahnen oder die Fenster der sämtlichen horizontal und vertikal verlaufenden Transportbahnen entsprechend Anspruch 25 von dem wareneingangsseitigen Ende der wenigstens zwei horizontal verlaufenden Transportbahnen bis zu dem wenigstens einen Palettierplatz stetig, insbesondere mit gleicher Fördergeschwindigkeit, bewegt werden.

Nach Anspruch 26 werden die Fenster der sämtlichen horizontal und vertikal verlaufenden Transportbahnen von dem wareneingangsseitigen Ende der wenigstens zwei horizontal verlaufenden Transportbahnen bis zu dem wenigstens einen Palettierplatz bevorzugt mit einer Fensterlänge, die aus einer Taktlänge und der Fördergeschwindigkeit eingestellt wird, belegt.

Die Fenster werden nach Anspruch 27 mit einer Fensterlänge der von etwa 0,1 bis 10,0 m, insbesondere von etwa 1,0 bis 3,0 m, und vorzugsweise von etwa 1,5 m versehen.

Von großem Interesse sind die Maßnahmen des Anspruchs 28. Danach werden die sämtlichen horizontal und vertikal verlaufenden Transportbahnen durch eine Einrichtung zur Steuerung, Erzeugung eines Taktes und einer Taktnummer sowie Zuteilung der Taktnummer an jedes Fenster gesteuert, durch welche jedes Fenster der sämtlichen horizontal und vertikal verlaufenden Transportbahnen von dem wareneingangsseitigen Ende der wenigstens zwei horizontal verlaufenden Transportbahnen bis zu dem wenigstens einen Palettierplatz individualisiert wird.

Darüber hinaus ist erfindungsgemäß vorgesehen, dass die Taktnummer von jedem Fenster der sämtlichen horizontal und vertikal verlaufenden Transportbahnen von dem wareneingangsseitigen Ende der wenigstens zwei horizontal verlaufenden Transportbahnen bis zu dem wenigstens einen Palettierplatz nach Anspruch 29 durch eine Einrichtung zur Taktzählung identifiziert wird.

In bevorzugter Weise werden die mindestens zwei horizontal verlaufenden Transportbahnen nach Anspruch 30 abschnittsweise in zwei oder mehrere Transportbahnsegmente, insbesondere in Blöcke oder Reihen, unterteilt, wodurch sich die von den Waren zurückzulegenden Wege zwischen wareneingangs- und ausgangseitigem Ende der horizontal verlaufenden Transportbahnen erheblich verkürzen lassen.

Von weiterem Vorteil sind die Merkmale des Anspruchs 31, mindestens eine oder zwei weitere horizontal und übereinander angeordnete Transportbahn/en neben den mindestens zwei im Wesentlichen horizontal und übereinander angeordneten Transportbahnen, insbesondere parallel zueinander, anzuordnen und mit den mindestens zwei horizontal verlaufenden Transportbahnen zusammenzuführen.

Darüber hinaus es von besonderem Vorteil, die zwei oder mehreren Transportbahnsegmente und/oder die mindestens eine oder zwei weitere/n horizontal verlaufende/n und übereinander angeordnete/n Transportbahn/en nach Anspruch 32 um eine Zusammenführungsbahnverlängerung mit einer Länge, welche der Länge zwischen dem Lagerbereich der Transportbahnsegmente oder der/den weiteren Transportbahn/en und der Zusammenführung entspricht, oder um eine Anzahl von zusätzlichen Fenstern, welche genau der Anzahl von Fenstern zwischen dem Lagerbereich der Transportbahnsegmente oder der/den weiteren horizontal verlaufenden Transportbahn/en und der Zusammenführung entspricht, zu verlängern. Dabei wird die Zusammenführungsbahnverlängerung dem wareneingangsseitigen Ende des/der Transportbahnsegmente/s und/oder der/den weitere/n horizontal verlaufenden Transportbahn/en, an welchem die Ware aufnehmbar ist, vorgeordnet.

Weiter liegt es im Rahmen der Erfindung, dass die Taktnummer von jedem Fenster nach Anspruch 33 an dem wareneingangsseitigen Ende der horizontal verlaufenden Transportbahnen mit der Taktnummer der Transportbahnsegmente und/oder der mindestens einen oder zwei weiteren horizontal verlaufenden Transportbahn/en im Bereich von deren Zusammenführung und/oder an dem warenausgangsseitigen Ende der horizontalen Transportbahnen mit der Taktnummer von jedem Fenster an dem wareneingangsseitigen Ende der mindestens einen vertikalen Transportbahn durch eine Einrichtung zur Überprüfung der Taktnummer verglichen wird.

Schließlich wird erfindungsgemäß ein Computerprogramm nach Anspruch 34 vorgesehen.

Weitere Vorteile und Einzelheiten der Erfindung ergeben sich aus der nachfolgenden Beschreibung von bevorzugten Ausführungsformen der Erfindung sowie anhand der Zeichnungen. Hierbei zeigen:
- Fig. 1: eine schematische perspektivische Ansicht einer Ausführungsform einer erfindungsgemäßen Vorrichtung zur reihenfolgerichtigen Kommissionierung und Bereitstellung von Waren bzw. Kolli,
- Fig. 2: eine schematische Seitenansicht einer weiteren Ausführungsform einer erfindungsgemäß ausgebildeten Vorrichtung mit sieben (im Wesentlichen) horizontal verlaufenden und übereinander angeordneten Transportbahnen und drei (im Wesentlichen) vertikal verlaufenden Transportbahnen, ohne Ware/n bzw. Kollo/Kolli,
- Fig. 3A bis 3H: schematische Seitenansichten eines Ausführungsbeispieles zum Transport von Waren bzw. Kolli über die beiden untersten horizontal verlaufenden Transportbahnen und die erste vertikal verlaufende Transportbahn zu einem Palettierplatz entsprechend der Fig. 2,
- Fig. 4A bis 4C: schematische Seitenansichten eines weiteren Ausführungsbeispieles zum Transport von Waren bzw. Kolli über sämtliche horizontal und vertikal verlaufende Transportbahnen zu drei Palettierplätzen entsprechend der Fig. 2,
- Fig. 5: eine schematische Draufsicht auf eine andere Ausführungsform einer erfindungsgemäßen Vorrichtung zur reihenfolgerichtigen Kommissionierung und Bereitstellung von Waren,
- Fig. 6: eine schematische Draufsicht auf eine Ausführungsform einer erfindungsgemäß ausgebildeten Vorrichtung mit sieben (im Wesentlichen) horizontal verlaufenden und übereinander angeordneten Transportbahnen und vier weiteren (im Wesentlichen) horizontal verlaufenden, daneben angeordneten Transportsegmenten oder Transportbahnen, ohne Ware/n bzw. Kollo/Kolli, und
- Fig. 7A und 7B: schematische Draufsichten auf ein Ausführungsbeispiel zum Transport von Waren bzw. Kolli von den vier weiteren (im Wesentlichen) horizontal verlaufenden, daneben angeordneten Transportsegmenten oder Transportbahnen mit einer Zusammenführung zu der horizontal verlaufenden Transportbahn entsprechend der Fig. 6.

Bei der nachfolgenden Beschreibung von Ausführungsbeispielen der erfindungsgemäßen Vorrichtung 10 zur reihenfolgerichtigen Kommissionierung und Bereitstellung von Waren 12 sind einander entsprechende, gleiche Bauteile jeweils mit identischen Bezugsziffern versehen.

Die Vorrichtung 10 nach der Erfindung ist zur reihenfolgerichtigen Kommissionierung und Bereitstellung von Waren 12 bzw. Kolli, insbesondere von quaderförmigem Stückgütern, wie Behältern, Kartons oder (Getränke-)Kisten, zu wenigstens einem oder an wenigstens einen Palettierplatz 14 vorgesehen.

Die Vorrichtung 10 umfasst mindestens zwei Transportbahnen 16, die horizontal oder im Wesentlichen horizontal verlaufen und übereinander angeordnet sind. Durch die mindestens zwei Transportbahnen 16 sind die Waren 12 von einem wareneingangsseitigen Ende 16' der Transportbahnen 16 vereinzelt aufnehmbar und zu einem warenausgangsseitigen Ende 16" der Transportbahnen 16 bewegbar.

Die Waren 12 werden dem wareneingangsseitigen Ende 16' der Transportbahnen 16 dabei über wenigstens einen Entpalettierplatz 18 und zum Beispiel ein mehrstöckiges Lager- oder Durchlaufregal 19 mit einer Vielzahl von Lagerkanälen und einer Abgabe- oder dergleichen Einschleusungseinrichtung (nicht gezeigt), welche den Transportbahnen 16 zu- und/oder vorgeordnet sind, zugeführt und an das wareneingangsseitige Ende 16' einzeln abgegeben bzw. übergeben.

Bei den Waren 12, die an das wareneingangsseitige Ende 16' einer der mindestens zwei horizontal verlaufenden Transportbahnen 16 einzeln abgegeben bzw. übergeben und somit von dieser einen Transportbahn 16 aufgenommen werden, kann es sich um Waren 12 gleicher Art, zum Beispiel um Kolli von gleicher Form, mit gleichen Abmessungen, mit gleichem Inhalt etc., handeln. Ohne darauf beschränkt zu sein, können die Waren 12, die von einer horizontal verlaufenden Transportbahn 16 aufgenommen werden, allerdings ebenso von unterschiedlicher Art zueinander, zum Beispiel von unterschiedlicher Form, unterschiedlichen Abmessungen, unterschiedlichem Inhalt etc., sein.

Die mindestens zwei Transportbahnen 16 können horizontal, nämlich genau in der Horizontalen, angeordnet bzw. ausgerichtet sein. Beispielsweise kann die Transportbahn 16 als Rollenbahnfördereinrichtung mit Rollen ausgebildet sein, die zumindest teilweise angetrieben sind. Ungeachtet dessen können die mindestens zwei Transportbahnen 16 jedoch ebenso im Wesentlichen horizontal, d.h. nicht genau, sondern weitgehend, horizontal verlaufen. Ohne im Einzelnen dargestellt zu sein, ist es möglich, dass die mindestens zwei im Wesentlichen horizontal verlaufenden Transportbahnen 16 geneigt ausgebildet sind. Zum Beispiel können die Transportbahnen 16 von deren wareneingangsseitigen Ende 16' hin zu deren warenausgangsseitigen Ende 16" in einer Neigung mit einem Winkel von bis zu etwa 15°, insbesondere zwischen etwa 2° und 10° und vorzugsweise zwischen etwa 3 ° und 7° zur bzw. gegenüber der Horizontalen angeordnet sein. Zur Klarstellung wird darauf hingewiesen, dass unter den Formulierungen "horizontal" bzw. "horizontal verlaufend" gleichbedeutend die Formulierung "horizontal oder im Wesentlichen horizontal verlaufend" zu verstehen ist.

Die Vorrichtung 10 umfasst weiterhin mindestens eine vertikal oder im Wesentlichen vertikal verlaufende Transportbahn 20. An die Transportbahn 20 sind die Waren 12 von dem warenausgangsseitigen Ende 16" der Transportbahnen 16 an ein wareneingangsseitiges Ende 20' der Transportbahn 20 übergebbar und von der Transportbahn 20 zu deren warenausgangseitigen Ende 20" bewegbar. In der vertikal verlaufenden Transportbahn 20 werden die Waren 12 von den einzelnen horizontal verlaufenden Transportbahnen 16 zusammengeführt und über deren wareneingangsseitiges Ende 20" zum Palettierplatz 14 transportiert.

Die mindestens eine Transportbahn 20 kann vertikal, nämlich genau in der Vertikalen, verlaufen. Beispielsweise kann die Transportbahn 20 als lineare Hubfördereinrichtung, vergleichbar einem Paternoster, ausgebildet sein. Ungeachtet dessen kann die mindestens eine Transportbahn 20 allerdings auch im Wesentlichen, d.h. nicht genau, somit weitgehend, horizontal verlaufen. Demnach ist es denkbar, die mindestens eine Transportbahn 20 vorzugsweise als Spiral- oder Schraubenfördereinrichtung auszubilden. Die Waren 12 bzw. Kolli werden mithin - streng genommen - nicht genau vertikal, sondern spiral- oder schraubenförmig um eine vertikale Achse der Transportbahn 20 herum geführt und bewegt. Die Windungen der als Spiral- oder Schraubenfördereinrichtung ausgebildeten Transportbahn 20 sind als vertikale Gerade dargestellt. Zur Klarstellung wird darauf hingewiesen, dass unter den Formulierungen "vertikal" bzw. "vertikal verlaufend" gleichbedeutend die Formulierung "vertikal oder im Wesentlichen vertikal verlaufend" zu verstehen ist.

Das warenausgangseitige Ende 20" der Transportbahn 20 ist dem einen Palettierplatz 14 oder einem der Palettierplätze 14 zugeordnet. Der Palettierplatz 14 befindet sich damit oberhalb der Transportbahn 20. Vorzugsweise ist jedem Palettierplatz 14 mindestens eine vertikal verlaufende Transportbahn 20 zu- bzw. vorgeordnet.

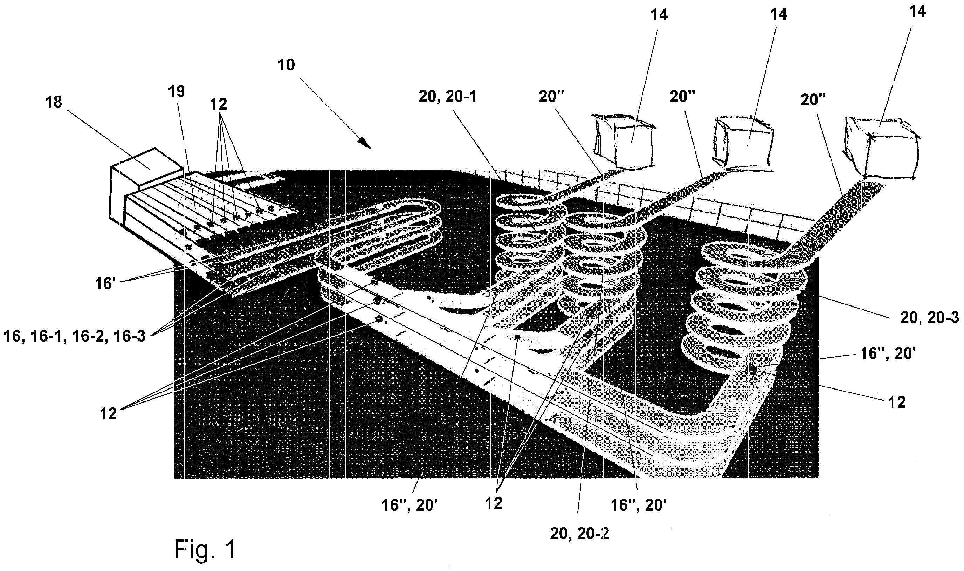

Die erfindungsgemäße Vorrichtung 10, die in der Fig. 1 beispielhaft dargestellt ist, umfasst drei horizontal verlaufende und übereinander angeordnete Transportbahnen 16, drei vertikal verlaufende Transportbahnen 20, die nebeneinander, insbesondere parallel zueinander, angeordnet sind, und drei Palettierplätze 14.

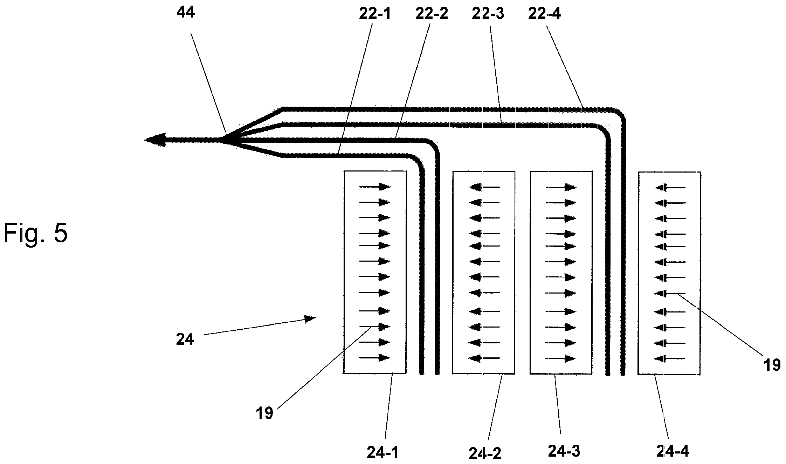

Die horizontal verlaufenden Transportbahnen 16 können zusätzlich, wie nachfolgend anhand der Fig. 5 noch näher erläutert ist, abschnittsweise in zwei oder mehrerer Transportbahnsegmente 22 unterteilt sein. Alternativ oder kumulativ kann/ können neben den horizontal verlaufenden Transportbahnen 16 mindestens eine oder weitere bzw. eine Vielzahl von Transportbahn/en 16 vorgesehen sein, die neben den mindestens zwei horizontal verlaufenden und übereinander angeordneten Transportbahnen 16 angeordnet und/oder mit den horizontal verlaufenden Transportbahnen 16 zusammenführbar sind. Die Transportbahnsegmente 22 und/der die weitere/n Transportbahn/en 16 sind zweckmäßigerweise in oder zu einem Block 24 bzw. einer Reihe und/oder parallel zueinander angeordnet. Auf diese Weise lassen sich die Wege zwischen dem wareneingangsseitigen Ende 16' der horizontal verlaufenden Transportbahn/en 16 und dem wenigstens einen Palettierplatz 14 erheblich verkürzen.

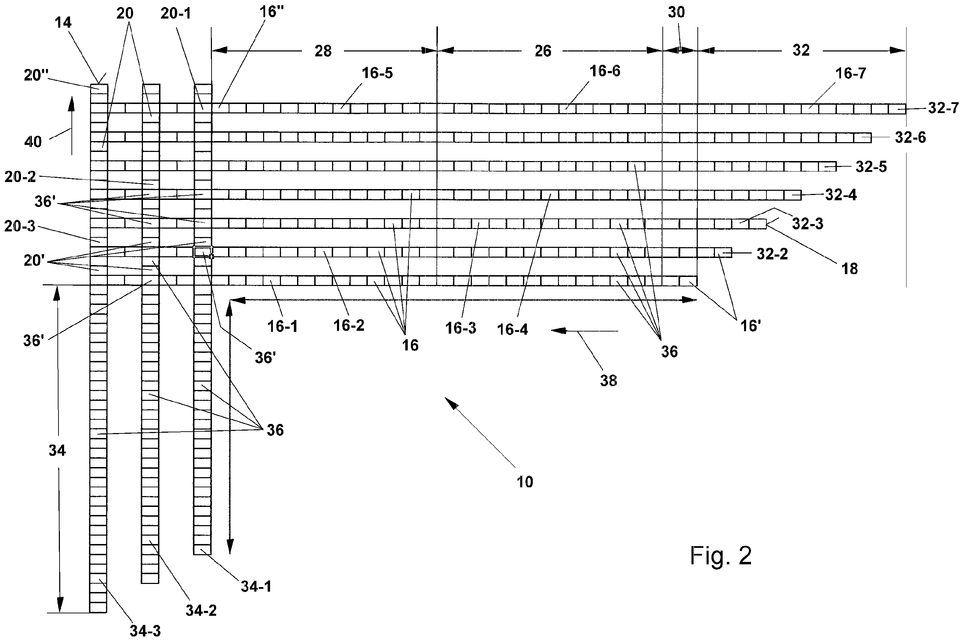

Entsprechend der Fig. 2 sind die sämtlichen horizontal oder im Wesentlichen horizontal verlaufenden Transportbahnen 16 und die mindestens eine vertikal oder im Wesentlichen vertikal verlaufende Transportbahn 20 in erfindungswesentlicher Ausgestaltung derart ausgebildet, dass der Weg einer Ware 12 bzw. eines Kollo von dem wareneingangsseitigen Ende 16' jeder der mindestens zwei horizontal verlaufenden Transportbahnen 16 zu dem warenausgangseitigen Ende 20" einer der mindestens einen vertikalen Transportbahn 20 des zugeordneten Palettierplatzes 14 von gleicher Länge ist.

Die Ausführungsform der erfindungsgemäßen Vorrichtung 10, die in der Fig. 2 schematisch dargestellt ist, umfasst beispielhaft sieben horizontal verlaufende Transportbahnen 16, die unmittelbar übereinander in sieben unterschiedlichen Ebenen angeordnet sind. Die unterste horizontal verlaufende Transportbahn 16-1 befindet sich in der untersten bzw. ersten Ebene. Die unmittelbar über bzw. oberhalb der Transportbahn 16-1 angeordnete, horizontal verlaufende Transportbahn 16-2 befindet sich in der zweiten Ebene, die unmittelbar über bzw. oberhalb der Transportbahn 16-2 angeordnete, horizontal verlaufende Transportbahn 16-3 befindet sich in der dritten Ebene, usw.

Wie aus der Fig. 2 weiter hervorgeht, sind die horizontal verlaufenden Transportbahnen 16 in bevorzugter Weise in verschiedene Bereiche unterteilt: So umfassen die horizontal verlaufenden Transportbahnen 16 grundsätzlich einen Lagerbereich 26 und einen Transportzuführbereich 28. Dem Lagerbereich 26 ist zum Beispiel das mehrstöckige Lager- oder Durchlaufregal 19 mit den Lagerkanälen und der Abgabe- oder dergleichen Einschleusungseinrichtung (nicht gezeigt) zu- bzw. vorgeordnet. Der Transportzuführbereich 28 ist dem Lagerbereich 26 nachgeordnet und reicht bis einschließlich zu dem warenausgangsseitigen Ende 16" der horizontal verlaufenden Transportbahnen 16, welches dem wareneingangsseitigen Ende 20' der vertikal verlaufenden Transportbahnen 20 zugeordnet ist. Der Transportzuführbereich 28 ist mithin den Transportbahnen 20 unmittelbar vorgeordnet und dient als Verbindung zwischen den Transportbahnen 16, 20. Wie den Fig. 1 und 2 zu entnehmen ist, kann der Transportzuführbereich 28 gerade und/oder kurvenförmig, d.h. geschwungen, oder mäanderförmig ausgebildet sein.

Zusätzlich können die horizontal verlaufenden Transportbahnen 16, wie bei der Ausführung nach der Fig. 2 vorgesehen ist, einen Startanlaufbereich 30 umfassen. Der Startanlaufbereich 30 ist dem Lagerbereich 26 vorgeordnet, um die gesamte Vorrichtung 10 und deren einzelne Bauelemente vor und beim Start der Vorrichtung 10 sämtlich zu koordinieren, etwa auf Null bzw. Start zu setzen, deren Funktionen und Funktionsfähigkeiten abzufragen und zu überprüfen etc., bevor die erste Ware 12 an eine der Transportbahnen 16 abgegeben bzw. in diese eingeschleust wird. Der Startanlaufbereich 30 der Transportbahnen 16 ist ausschließlich optional vorgesehen. Ohne die Funktion der erfindungsgemäßen Vorrichtung 10 selbst, auch nur teilweise, zu beeinträchtigen, ist es daher auch jederzeit möglich, auf den Startanlaufbereich 30, welcher dem eigentlichen Lagerbereich 26 vorgeordnet ist, zu verzichten oder in den Lagerbereich 26 selbst zu integrieren.

Entsprechend der Fig. 2 umfasst die Ausführungsform der erfindungsgemäßen Vorrichtung 10 weiterhin zum Beispiel drei vertikal verlaufende oder im Wesentlichen vertikal verlaufende Transportbahnen 20, die nebeneinander, vorzugsweise zueinander gleichbeanstandet, angeordnet sind. Die erste vertikal verlaufende Transportbahn 20-1 ist zu dem wareneingangsseitigen Ende 16' der horizontal verlaufenden Transportbahnen 16 am nächsten gelegen. Die zweite vertikal verlaufende Transportbahn 20-2 ist links neben der ersten vertikal verlaufenden Transportbahn 20-1 und die dritte vertikal verlaufende Transportbahn 20-3 ist wiederum links neben der zweiten vertikal verlaufenden Transportbahn 20-2 angeordnet. Während sich die zweite vertikal verlaufende Transportbahn 20-2 zwischen der ersten und dritten vertikal verlaufenden Transportbahn 20-1, 20-3 befindet, ist die dritte vertikal verlaufende Transportbahn 20-3 zu dem wareneingangsseitigen Ende 16' der horizontal verlaufenden Transportbahnen 16 am weitesten entfernt angeordnet.

In der Fig. 2 ist der wenigstens eine Palettierplatz 14, welcher dem warenausgangsseitigen Ende 20" der vertikal verlaufenden Transportbahnen 20 nachgeordnet ist bzw. diesen nachfolgt, nur andeutungsweise dargestellt. Bevorzugt sind mehrere Palettierplätze 14 vorgesehen, wobei einem Palettierplatz 14 in vorteilhafter Weise jeweils mindestens eine vertikal verlaufende Transportbahn 20 zugeordnet ist. Bei dem in der Fig. 2 gezeigten Ausführungsbeispiel sind jeweils einem Palettierplatz 14 eine der vertikal verlaufenden Transportbahnen 20 zugeordnet.

Eine solche Ausbildung der Vorrichtung 10 nach der Erfindung lässt sich zum einen durch eine entsprechende bauliche Ausgestaltung der Vorrichtung 10 selbst erhalten. Dabei sind die mindestens zwei horizontal verlaufenden Transportbahnen 16 und die mindestens eine vertikal verlaufende Transportbahn 20 konstruktiv, d.h. physisch, mittels Transportbahnverlängerungen 32, 34 verlängert.

Die oberen Transportbahnen 16-2, 16-3, 16-4, 16-5, 16-6, 16-7 sind gegenüber den unteren Transportbahnen 16-1. 16-2, 16-3, 16-4, 16-5, 16-6 von den mindestens zwei horizontal verlaufenden Transportbahnen 16, die unmittelbar übereinander benachbart angeordnet sind, um eine Transportbahnverlängerung 32 verlängert. Die Transportbahnverlängerung 32 bzw. Transportbahnverlängerungen 32-2, 32-3, 32-4, 32-5, 32-6, 32-7 ist/sind dem wareneingangsseitigen Ende 16' der oberen Transportbahnen 16-2, 16-3, 16-4, 16-5, 16-6, 16-7, an welchem die Ware 12 aufnehmbar ist, vorgeordnet.

Die Transportbahnverlängerung/en 32 bzw. 32-2, 32-3, 32-4, 32-5, 32-6, 32-7 weist/weisen dabei eine Länge auf, welche der Länge der vertikal verlaufenden Transportbahn 20 zwischen dem warenausgangsseitigen Ende 16" der jeweils unteren Transportbahn 16-1, 16-2, 16-3, 16-4, 16-5, 16-6 und dem warenausgangsseitigen Ende 16" der jeweils oberen Transportbahn 16-2, 16-3, 16-4, 16-5, 16-6, 16-7 entspricht. Auf diese Weise wird der Höhenunterschied zwischen der unteren Transportbahn 16-1, 16-2, 16-3, 16-4, 16-5, 16-6 und der oberen Transportbahn 16-2, 16-3, 16-4, 16-5, 16-6, 16-7 ausgeglichen.

Des Weiteren sind die vertikal verlaufenden Transportbahnen 20-1, 20-2, 20-3 um eine Transportbahnverlängerung 34 verlängert. Die Transportbahnverlängerung 34 bzw. die Transportbahnverlängerungen 34-1, 34-2, 34-3 ist/sind jeweils dem wareneingangsseitigem Ende 20' der vertikal verlaufenden Transportbahn 20-1, 20-2, 20-3, an welches die Ware 12 von dem warenausgangsseitigen Ende 16" der zugeordneten horizontal verlaufenden Transportbahn 16-1, 16-2, 16-3, 16-4, 16-5, 16-6, 16-7 übergebbar ist, vorgeordnet.

Dabei besitzt/besitzen die Transportbahnverlängerung/en 34 bzw. 34-1, 34-2, 34-3 eine Länge, welche der Länge der horizontal verlaufenden Transportbahn 16, die dem wareneingangsseitigen Ende 20' der vertikalen Transportbahn 20-1, 20-2, 20-3 zugeordnet ist, von deren wareneingangsseitigen Ende 20' zu deren warenausgangseitigen Ende 20" entspricht.

Eine solche Ausbildung der Vorrichtung 10 nach der Erfindung lässt sich zum anderen durch eine Simulation oder dergleichen erreichen. Die Simulation kann vorzugsweise computergestützt sein. Dabei sind die mindestens zwei horizontal verlaufenden Transportbahnen 16 jeweils zueinander und, wenn mehr als eine vertikal verlaufende Transportbahn 20 vorhanden ist, die mindestens zwei vertikal verlaufenden Transportbahnen 20 jeweils zueinander im Wesentlichen baugleich ausgebildet und durch eine Einrichtung zur Simulation (nicht dargestellt) der Transportbahnverlängerungen 32, 34 verlängerbar. Es ist erfindungsgemäß mithin eine sogenannte gedankliche oder auch quasi fiktive Verlängerung der Transportbahnen 16, 20 vorgesehen. Auf diese Weise lassen sich die Baulänge und/oder Bauhöhe der erfindungsgemäßen Vorrichtung 10, die durch eine physische Ausgestaltung, wie zuvor beschrieben ist, erhalten wird, erheblich reduzieren.

Wie ebenfalls der Fig. 2 zu entnehmen ist, sind die sieben horizontal verlaufenden Transportbahnen 16-1, 16-2, 16-3, 16-4, 16-5, 16-6, 16-7 und die drei vertikal verlaufenden Transportbahnen 20-1, 20-2, 20-3 dabei in Fenster 36 von gleicher Anzahl unterteilt. Die einzelnen Fenster 36 dienen der Aufnahme jeweils einer Ware 12 und sind in horizontaler Förderrichtung gemäß Pfeil 38 bzw. in vertikaler Förderrichtung gemäß Pfeil 40 kontinuierlich bewegbar.

Auch wenn in der Fig. 2 und den nachfolgenden Figuren die Darstellung der Fenster 36 nicht maßstäblich ist, stimmen diese in ihrer Anzahl überein. Dabei sind allerdings die Fenster 36', welche zeichnerisch ein "gemeinsames Fenster" oder "Kreuzungsfenster" zwischen den horizontal verlaufenden Transportbahnen 16-1, 16-2, 16-3, 16-4, 16-5, 16-6, 16-7 und den vertikal verlaufenden Transportbahnen 20-1, 20-2, 20-3 bilden, unberücksichtigt gelassen. Bei den Fenstern 36' handelt es sich um Fenster zum Durchgang/zur Durchreichung der Ware 12 durch die erste vertikal verlaufende Transportbahn 20-1 zu der zweiten vertikal verlaufenden Transportbahn 20-2 bzw. durch die zweite vertikal verlaufende Transportbahn 20-2 zu der dritten vertikal verlaufenden Transportbahn 20-3, usw. Die Fenster 36' stellen quasi ein "Leerlauffenster" dar und sind daher nicht miteinzurechnen. In der Fig. 2 sind derartige Fenster 36' ersichtlich, wie nur beispielhaft das hervorgehobene Fenster 36' in der horizontal verlaufenden Transportbahn 16-2 und der vertikal verlaufenden Transportbahn 20-1.

Die oberen Transportbahnen 16-2, 16-3, 16-4, 16-5, 16-6, 16-7 sind gegenüber den unteren Transportbahnen 16-1, 16-2, 16-3, 16-4, 16-5, 16-6 der den mindestens zwei horizontal verlaufenden Transportbahnen 16, die unmittelbar übereinander benachbart angeordnet sind, um eine Transportbahnverlängerung 32 verlängert. Die Transportbahnverlängerung/en 32 bzw. 32-2, 32-3, 32-4, 32-5, 32-6, 32-7 erfolgt/erfolgen durch Aufnahme bzw. Hinzufügung einer Anzahl von zusätzlichen Fenstern 36, welche genau der Anzahl von Fenstern 36 der vertikal verlaufenden Transportbahn 20 zwischen dem warenausgangsseitigen Ende 16" der jeweils unteren Transportbahn 16-1, 16-2, 16-3, 16-4, 16-5, 16-6 und dem warenausgangsseitigen Ende 16" der jeweils oberen Transportbahn 16-2, 16-3, 16-4, 16-5, 16-6, 16-7 entspricht. Auf diese Weise wird der Höhenunterschied zwischen der unteren Transportbahn 16-1, 16-2, 16-3, 16-4, 16-5, 16-6 und der oberen Transportbahn 16-2, 16-3, 16-4, 16-5, 16-6, 16-7 ausgeglichen.

Zurückkommend auf die Fig. 2, ist die obere, horizontal verlaufende Transportbahn 16-2 gegenüber der unteren Transportbahn 16-1 um eine Transportbahnverlängerung 32-2 von zwei Fenstern 36 verlängert. Diese zwei Fenster 36 entsprechen genau dem Höhenunterschied von zwei Fenstern 36 der vertikal verlaufenden Transportbahnen 20-1, 20-2, 20-3 zwischen dem warenausgangsseitigen Ende 16" der unteren Transportbahn 16-1 und dem warenausgangsseitigen Ende 16" der oberen Transportbahn 16-2, wobei die Fenster 36' zwischen der horizontalen Transportbahn 16-1 und den vertikalen Transportbahnen 20-1, 20-2, 20-3 nicht miteingerechnet sind. Der Höhenunterschied zwischen der horizontal verlaufenden Transportbahn 16-3 und der Transportbahn 16-2 beträgt gleichermaßen zwei Fenster 36, die wiederum als Transportbahnverlängerung 32-3 berücksichtigt werden, usw. Durch die Transportbahnverlängerung 32-3 umfasst die horizontale Transportbahn 16-3 mithin vier Fenster mehr als die Transportbahn 16-1 und zwei Fenster mehr als die Transportbahn 16-2, usw.

Die Transportbahnverlängerung/en 32 bzw. 32-2, 32-3, 32-4, 32-5, 32-6, 32-7 in Form der zusätzlichen Fenster 36 ist/sind dem wareneingangsseitigen Ende 16' der oberen Transportbahnen 16-2, 16-3, 16-4, 16-5, 16-6, 16-7, an welchem die Ware 12 aufnehmbar ist, vorgeordnet.

Darüber hinaus sind die vertikal verlaufenden Transportbahnen 20-1, 20-2, 20-3 um eine Transportbahnverlängerung 34 verlängert. Die Transportbahnverlängerung/en 34 bzw. 34-1, 34-2, 34-3 erfolgt/erfolgen durch Aufnahme bzw. Hinzufügung einer Anzahl von zusätzlichen Fenstern 36, welche genau der Anzahl von Fenstern 36 der horizontal verlaufenden Transportbahn 16, die dem wareneingangsseitigen Ende 20' der vertikalen Transportbahn 20-1, 20-2, 20-3 zugeordnet ist, von deren wareneingangsseitigen Ende 16' zu deren warenausgangseitigen Ende 16" entspricht.

Nochmals zurückkommend auf die Fig. 2, ist die vertikal verlaufende Transportbahn 20-1, ausgehend von dem wareneingangsseitigen Ende 20', das der horizontalen Transportbahn 16-1 zugeordnet ist, beispielsweise um eine Transportbahnverlängerung 34-1 von 28 Fenstern 36 verlängert. Die 28 Fenster entsprechen genau der Anzahl von 28 Fenstern zwischen dem wareneingangsseitigen Ende 16' und warenausgangseitigen Ende 16" der horizontalen Transportbahn 16-1. Das Fenster 36' zwischen der horizontalen Transportbahn 16-1 und der vertikalen Transportbahn 20-1 wird nicht mitgerechnet. Weiter ist die vertikal verlaufende Transportbahn 20-1, ausgehend von dem wareneingangsseitigen Ende 20', das der horizontalen Transportbahn 16-2 zugeordnet ist, zum Beispiel um eine Transportbahnverlängerung 34-1 von 30 Fenstern 36 verlängert. Die 30 Fenster entsprechen genau der Anzahl von 30 Fenstern zwischen dem wareneingangsseitigen Ende 16' und warenausgangseitigen Ende 16" der horizontalen Transportbahn 16-2 einschließlich Transportbahnverlängerung 32-2. Das Fenster 36' zwischen der horizontalen Transportbahn 16-2 und der vertikalen Transportbahn 20-1 bleibt wiederum unberücksichtigt, usw.

Die vertikal verlaufende Transportbahn 20-2 wiederum weist, ausgehend von dem wareneingangsseitigen Ende 20', das der horizontalen Transportbahn 16-1 zugeordnet ist, eine Transportbahnverlängerung 34-2 von 31 Fenstern auf, ist also gegenüber der Transportbahnverlängerung 34-1 der vertikalen Transportbahn 20-1 um drei Fenster 36 länger ausgebildet. Diese 31 Fenster resultieren aus der Anzahl von 31 Fenstern 36 zwischen dem wareneingangsseitigen Ende 16' und warenausgangseitigen Ende 16" der horizontalen Transportbahn 16-1. Das Fenster 36' zwischen der horizontalen Transportbahn 16-1 und der vertikalen Transportbahn 20-2 wird nicht mitgerechnet. Die drei zusätzlichen Fenster 36 resultieren aus dem längeren Weg, welchen die Waren 12 über die vertikale Transportbahn 20-1 hinaus zu der vertikalen Transportbahn 20-2 zurückzulegen haben. Weiter ist die vertikal verlaufende Transportbahn 20-2, ausgehend von dem wareneingangsseitigen Ende 20', das der horizontalen Transportbahn 16-2 zugeordnet ist, zum Beispiel um eine Transportbahnverlängerung 34-1 von 33 Fenstern 36 verlängert. Die 33 Fenster entsprechen genau der Anzahl von 33 Fenstern zwischen dem wareneingangsseitigen Ende 16' und warenausgangseitigen Ende 16" der horizontalen Transportbahn 16-2 einschließlich Transportbahnverlängerung 32-2. Das Fenster 36' zwischen der horizontalen Transportbahn 16-2 und der vertikalen Transportbahn 20-2 bleibt wiederum unberücksichtigt, usw.

Schließlich umfasst die vertikal verlaufende Transportbahn 20-3, ausgehend von dem wareneingangsseitigen Ende 20', das der horizontalen Transportbahn 16-1 zugeordnet ist, eine Transportbahnverlängerung 34-3 von 34 Fenstern, ist also gegenüber der Transportbahnverlängerung 34-2 der vertikalen Transportbahn 20-2 um drei Fenster 36 bzw. gegenüber der Transportbahnverlängerung 34-1 der vertikalen Transportbahn 20-1 um sechs Fenster 36 länger ausgebildet. Diese 34 Fenster resultieren aus der Anzahl von 34 Fenstern 36 zwischen dem wareneingangsseitigen Ende 16' und warenausgangseitigen Ende 16" der horizontalen Transportbahn 16-1. Das Fenster 36' zwischen der horizontalen Transportbahn 16-1 und der vertikalen Transportbahn 20-3 wird nicht mitgerechnet. Die drei zusätzlichen Fenster 36 resultieren aus dem längeren Weg, welchen die Waren 12 über die vertikale Transportbahn 20-2 hinaus zu der vertikalen Transportbahn 20-3 zurücklegen müssen. Weiter ist die vertikal verlaufende Transportbahn 20-3, ausgehend von dem wareneingangsseitigen Ende 20', das der horizontalen Transportbahn 16-2 zugeordnet ist, zum Beispiel um eine Transportbahnverlängerung 34-3 von 36 Fenstern 36 verlängert. Die 36 Fenster entsprechen genau der Anzahl von 36 Fenstern zwischen dem wareneingangsseitigen Ende 16' und warenausgangseitigen Ende 16" der horizontalen Transportbahn 16-2 einschließlich Transportbahnverlängerung 32-2. Das Fenster 36' zwischen der horizontalen Transportbahn 16-2 und der vertikalen Transportbahn 20-3 bleibt wiederum unberücksichtigt, usw.

Die zusätzlichen Fenster 36 zur Bildung der Transportbahnverlängerung/en 34 bzw. 34-1, 34-2, 34-3 sind dabei jeweils dem wareneingangsseitigem Ende 20' der vertikal verlaufenden Transportbahn 20-1, 20-2, 20-3, an welches die Ware 12 von dem warenausgangsseitigen Ende 16" der zugeordneten horizontal verlaufenden Transportbahn 16-1, 16-2, 16-3, 16-4, 16-5, 16-6, 16-7 übergebbar ist, vorgeordnet.

Damit ergeben sich vom jeweiligen wareneingangsseitigen Ende 16' jeder der horizontal verlaufenden Transportbahnen 16 bzw. 16-1, 16-2, 16-3, 16-4, 16-5, 16-6, 16-7 bis zum warenausgangsseitigen Ende 20" der vertikal verlaufenden Transportbahn 20-1 insgesamt 42 von den Waren 12 zu durchlaufende Fenster 36. Die vertikal verlaufende Transportbahn 20-1 weist aufgrund der Transportbahnverlängerung 34-1 eine gleiche Länge mit insgesamt ebenfalls 42 Fenster 36 auf. Die als "Leerlauffenster" zu betrachtenden Fenster 36' zwischen der vertikalen Transportbahn 20-1 und den jeweiligen horizontalen Transportbahnen 16-1, 16-2, 16-3, 16-4, 16-5, 16-6 und 16-7 sind sämtlich nicht miteingerechnet.

Vom jeweiligen wareneingangsseitigen Ende 16' jeder der horizontal verlaufenden Transportbahnen 16 bzw. 16-1, 16-2, 16-3, 16-4, 16-5, 16-6, 16-7 bis zum warenausgangsseitigen Ende 20" der vertikal verlaufenden Transportbahn 20-2 sind insgesamt 45 von den Waren 12 zu durchlaufende Fenster 36 vorhanden. Die vertikal verlaufende Transportbahn 20-2 weist aufgrund der Transportbahnverlängerung 34-2 eine gleiche Länge mit insgesamt ebenfalls 45 Fenster 36 auf. Dabei sind die als "Leerlauffenster" zu betrachtenden Fenster 36' zwischen der vertikalen Transportbahn 20-2 und den jeweiligen horizontalen Transportbahnen 16-1, 16-2, 16-3, 16-4, 16-5, 16-6 und 16-7 wiederum nicht miteingerechnet. Die drei zusätzlichen Fenster 36 ergeben sich aus dem verlängerten Weg der Waren 12 auf den horizontal verlaufenden Transportbahnen 16 bzw. 16-1, 16-2, 16-3, 16-4, 16-5, 16-6, 16-7 vom wareneingangsseitigen Ende 16' zu dem warenausgangsseitigen Ende 16", wobei nunmehr das als "Leerlauffenster" zu betrachtende Fenster 36' zwischen der Transportbahn 20-1 und den jeweiligen horizontalen Transportbahnen 16-1, 16-2, 16-3, 16-4, 16-5, 16-6 und 16-7 miteinzubeziehen ist.

Entsprechendes gilt für die vertikal verlaufende Transportbahn 20-3. Vom jeweiligen wareneingangsseitigen Ende 16' jeder der horizontal verlaufenden Transportbahnen 16 bzw. 16-1, 16-2, 16-3, 16-4, 16-5, 16-6, 16-7 bis zum warenausgangsseitigen Ende 20" der vertikal verlaufenden Transportbahn 20-3 sind von den Waren 12 insgesamt 48 Fenster 36 zu durchlaufen. Die vertikal verlaufende Transportbahn 20-3 weist aufgrund der Transportbahnverlängerung 34-3 eine gleiche Länge mit insgesamt ebenfalls 48 Fenster 36 auf. Dabei sind die als "Leerlauffenster" zu betrachtenden Fenster 36' zwischen der vertikalen Transportbahn 20-3 und den jeweiligen horizontalen Transportbahnen 16-1, 16-2, 16-3, 16-4, 16-5, 16-6 und 16-7 nicht miteingerechnet. Die sechs zusätzlichen Fenster 36 ergeben sich aus dem verlängerten Weg der Waren 12 auf den horizontal verlaufenden Transportbahnen 16 bzw. 16-1, 16-2, 16-3, 16-4, 16-5, 16-6, 16-7 vom wareneingangsseitigen Ende 16' zu dem warenausgangsseitigen Ende 16", wobei nunmehr die als "Leerlauffenster" zu betrachtenden zwei Fenster 36' zwischen den Transportbahnen 20-1, 20-2 und den jeweiligen horizontalen Transportbahnen 16-1, 16-2, 16-3, 16-4, 16-5, 16-6 und 16-7 mithinzugezählt sind.

Wie nachfolgend noch näher ausgeführt ist, sind die sämtlichen horizontal und vertikal verlaufenden Transportbahnen 16, 20 bzw. 16-1, 16-2, 16-3, 16-4, 16-5, 16-6, 16-7, 20-1, 20-2, 20-3 oder die Fenster 36 der horizontal und vertikal verlaufenden Transportbahnen 16, 20 bzw. 16-1, 16-2, 16-3, 16-4, 16-5, 16-6, 16-7, 20-1, 20-2, 20-3 von dem wareneingangsseitigen Ende 16' der horizontal verlaufenden Transportbahnen 16-1, 16-2, 16-3, 16-4, 16-5, 16-6, 16-7 bis zu dem wenigstens einen Palettierplatz 14 stetig bewegbar. Insbesondere werden die sämtlichen horizontal und vertikal verlaufenden Transportbahnen 16, 20 oder die Fenster 36 mit gleicher Fördergeschwindigkeit bewegt. Die Verfolgung der Fenster 36 wird dabei quasi stetig vorgenommen, zum Beispiel anhand von Zählimpulsen im Takt von ca. 0,5 m Bewegung pro Impuls.

Die Fenster 36 der horizontal und vertikal verlaufenden Transportbahnen 16, 20 bzw. 16-1, 16-2, 16-3, 16-4, 16-5, 16-6, 16-7, 20-1, 20-2, 20-3 weisen in vorteilhafter Weise eine Fensterlänge auf, die aus der Taktlänge und der Fördergeschwindigkeit einstellbar ist. Bevorzugt ist eine Fensterlänge der Fenster 36 von etwa 0,1 bis 10,0 m, insbesondere von etwa 1,0 bis 3,0 m, und in ganz vorteilhafter Weise von etwa 1,5 m.

Ohne im Einzelnen gezeigt zu sein, sind die horizontal und vertikal verlaufenden Transportbahnen 16, 20 bzw. 16-1, 16-2, 16-3, 16-4, 16-5, 16-6, 16-7, 20-1, 20-2, 20-3 durch eine oder mehrere miteinander kommunizierende/n Einrichtung/en steuerbar, um unter anderem einen Takt zu erzeugen und/oder eine Taktnummer zu generieren und/oder die generierte Taktnummer einem jeweiligen Fenster 36 zuzuteilen bzw. zuzuordnen. Durch die Taktnummer wiederum ist jedes Fenster 36 der sämtlichen horizontal und vertikal verlaufenden Transportbahnen 16, 20 von dem wareneingangsseitigen Ende 16' der horizontal verlaufenden Transportbahnen 16 bis zu dem jeweils vorbestimmten Palettierplatz 14 individualisierbar.

Wie ebenfalls nicht gezeigt ist, ist den sämtlichen horizontal und vertikal verlaufenden Transportbahnen 16, 20 eine Einrichtung zur Taktzählung zugeordnet. Durch die Einrichtung zur Taktzählung wird die Taktnummer von jedem Fenster 36 der sämtlichen horizontal und vertikal verlaufenden Transportbahnen 16, 20 bzw. 16-1, 16-2, 16-3, 16-4, 16-5, 16-6, 16-7, 20-1, 20-2, 20-3 von deren wareneingangsseitigen Ende 16' bis zu dem Palettierplatz 14 identifiziert. Dabei ist jede Transportbahn 16, 20 vorzugsweise individuell mit einer solchen Einrichtung zur Taktzählung, wie einem Impulsgeber, ausgestattet. Alternativ kann jedoch die Einrichtung zur Taktzählung mehreren bzw. sämtlichen Transportbahnen 16, 20 halbzentral oder zentral zugeordnet sein.

Schließlich ist die Vorrichtung 10 nach der Erfindung mit einer Einrichtung zur Überprüfung der Taktnummer (nicht dargestellt) von jedem Fenster 36 ausgestattet. Durch die Einrichtung zur Überprüfung der Taktnummer findet ein Abgleich von jedem Fenster 36 an dem wareneingangsseitigen Ende 16' der horizontal verlaufenden Transportbahnen 16 mit der Taktnummer der Transportbahnsegmente 22 und/oder der weiteren horizontal verlaufenden Transportbahn/en 16 im Bereich von deren Zusammenführung und/oder an dem warenausgangsseitigen Ende 16" der horizontalen Transportbahnen 16 mit der Taktnummer von jedem Fenster 36 an dem wareneingangsseitigen 20' Ende der vertikalen Transportbahn 20 statt. Dabei ist jede Transportbahn 16, 20 vorzugsweise individuell mit einer solchen Einrichtung zur Überprüfung der Taktnummer versehen. Alternativ kann jedoch die Einrichtung zur Überprüfung der Taktnummer mehreren bzw. sämtlichen Transportbahnen 16, 20 halbzentral oder zentral zugeordnet sein.

Das erfindungsgemäße Verfahren zur reihenfolgerichtigen Kommissionierung und Bereitstellung der Waren 12 bzw. Kolli erfolgt in entsprechender Weise zu der erfindungsgemäßen Vorrichtung 10, ist im Übrigen anhand von verschiedenen Beispielen nachfolgend näher erläutert.

Zunächst erfolgt die Generierung der Fenster 36:
Die horizontal und vertikal verlaufenden Transportbahnen 16, 20 bzw. 16-1, 16-2, 16-3, 16-4, 16-5, 16-6, 16-7, 20-1, 20-2, 20-3 werden durch eine oder mehrere miteinander kommunizierende/n Einrichtung/en, zum Beispiel einen Steuerrechner, in Fenster 36 aufgeteilt, die sich entsprechend der tatsächlichen Fördergeschwindigkeit durch die erfindungsgemäße Vorrichtung 10 bewegen. Die Fenster 36 werden dabei entsprechend einem konstanten Takt, zum Beispiel von 1,5 s, in der horizontalen Förderrichtung gemäß Pfeil 38 und der vertikalen Förderrichtung gemäß Pfeil 40 generiert. Die Fensterlänge der einzelnen Fenster 36 errechnet sich aus der Taktlänge und der eingestellten Fördergeschwindigkeit.

Die Takte werden mitgezählt. Jedes Fenster 36 führt die Taktnummer, zu der es generiert wurde, mit und ist damit durch die Taktnummer identifizierbar.

Die Fenster 36 werden nun stetig in der horizontalen Förderrichtung gemäß Pfeil 38 und der vertikalen Förderrichtung gemäß Pfeil 40 bewegt. Ein Zählimpuls an allen horizontal und vertikal verlaufenden Transportbahnen 16, 20 bzw. 16-1, 16-2, 16-3, 16-4, 16-5, 16-6, 16-7, 20-1, 20-2, 20-3 wird durch die Einrichtung zur Taktzählung, die vorzugsweise individuell ausgebildet ist, ausgewertet.

Sodann erfolgt die Belegung der generierten Fenster 36:
Bei jedem Takt wird ein Fenster 36 jeweils einer horizontal verlaufenden Transportbahn 16 bzw. 16-1, 16-2, 16-3, 16-4, 16-5, 16-6, 16-7 und jeweils einer vertikal verlaufenden Transportbahn 20 bzw. 20-1, 20-2, 20-3 für eine Ware 12 bzw. einen Kollo belegt.

Aus der Liste der Waren 12 bzw. Kolli, die zu einem (vor-) bestimmten Palettierplatz 14 über die jeweils zugeordnete, vertikal verlaufende Transportbahn 20 bzw. 20-1, 20-2, 20-3 transportiert werden soll, wird jeweils die nächste Ware 12 ausgewählt und geprüft, ob die Ware 12 gestartet werden kann. Wenn die Ware 12 nicht gestartet werden kann, bleibt das Fenster 36 in der vertikal verlaufenden Transportbahn 20 leer. Die Ware 12 wird zu einem späteren Zeitpunkt gestartet.

Die erfindungsgemäße Vorrichtung 10 und das Verfahren sowie deren Funktionsweise werden nachfolgend anhand von verschiedenen Beispielen erläutert.

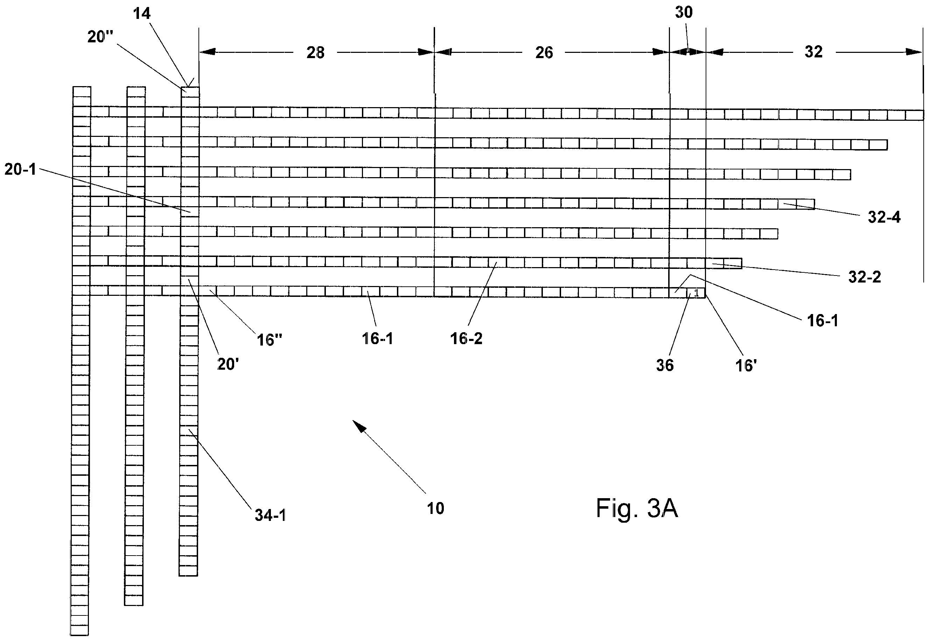

In den Fig. 3A bis 3H ist ein Transport von zwei Waren 12 über die horizontal verlaufenden Transportbahnen 16-1, 16-2 und die vertikal verlaufende Transportbahn 20-1 zu dem dieser zugeordneten Palettierplatz 14 schematisch dargestellt.

Die Fig. 3A zeigt die Vorrichtung 10 beim "Takt 0". Ein Fenster 36 der horizontal verlaufenden Transportbahn 16-1 wird für eine Ware 12 gestartet. Die Ware 12 ist für den Palettierplatz 14 am warenausgangsseitigen Ende 20" der vertikal verlaufenden Transportbahn 20-1 bestimmt. Daher ist das Fenster 36 mit "1" bezeichnet. Das Fenster 36 ist noch leer, d.h. ohne die Ware 12, und daher weiß hinterlegt.

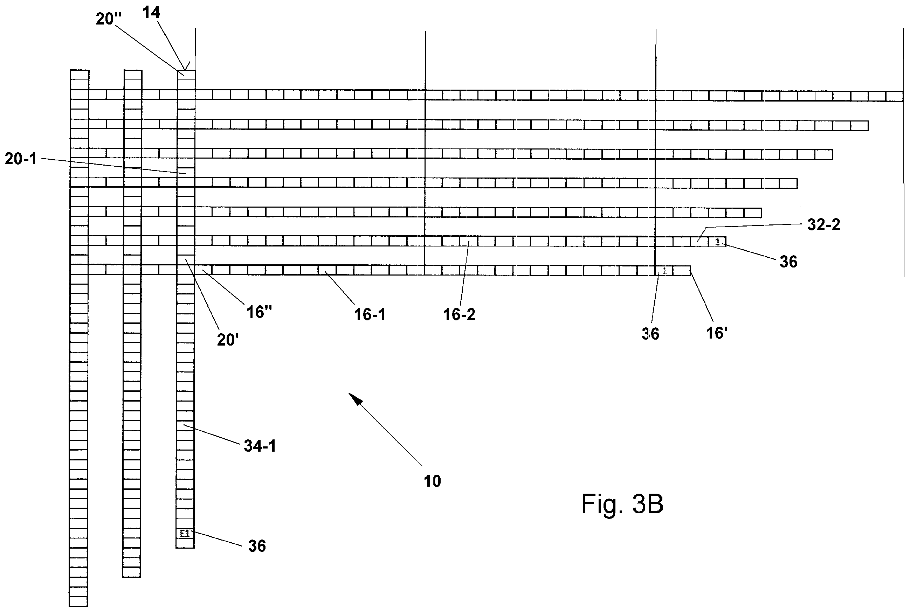

Die Fig. 3B zeigt die Vorrichtung 10 beim "Takt 1". Ein Fenster 36 der Transportbahnverlängerung 32-2, welche der horizontal verlaufenden Transportbahn 16-2 vorgeordnet ist, wird für eine Ware 12 gestartet. Die Ware 12 ist auch für den Palettierplatz 14 am warenausgangsseitigen Ende 20" der vertikal verlaufenden Transportbahn 20-1 bestimmt. Daher ist das Fenster 36 ebenfalls mit "1" bezeichnet. Wäre dieses Fenster für die vertikal verlaufende Transportbahn 20-2 oder 20-3 bestimmt, würde das Fenster mit "2" oder "3" bezeichnet sein. Das Fenster 36 ist noch leer, d.h. ohne die Ware 12, und daher weiß hinterlegt. Gleichzeitig wird in der Transportbahnverlängerung 34-1, welche der vertikal verlaufenden Transportbahn 20-1 vorgeordnet ist, ein Fenster 36, das mit "E1" bezeichnet ist, für die Ware 12 der Transportbahn 16-1, d.h. der horizontalen Transportbahn 16 in der ersten Ebene, reserviert. Wäre dieses Fenster für die horizontale Transportbahn 16-4 in der vierten Ebene oder 16-7 in der siebten Ebene bestimmt, würde das Fenster mit "E4" oder "E7" bezeichnet sein, usw.

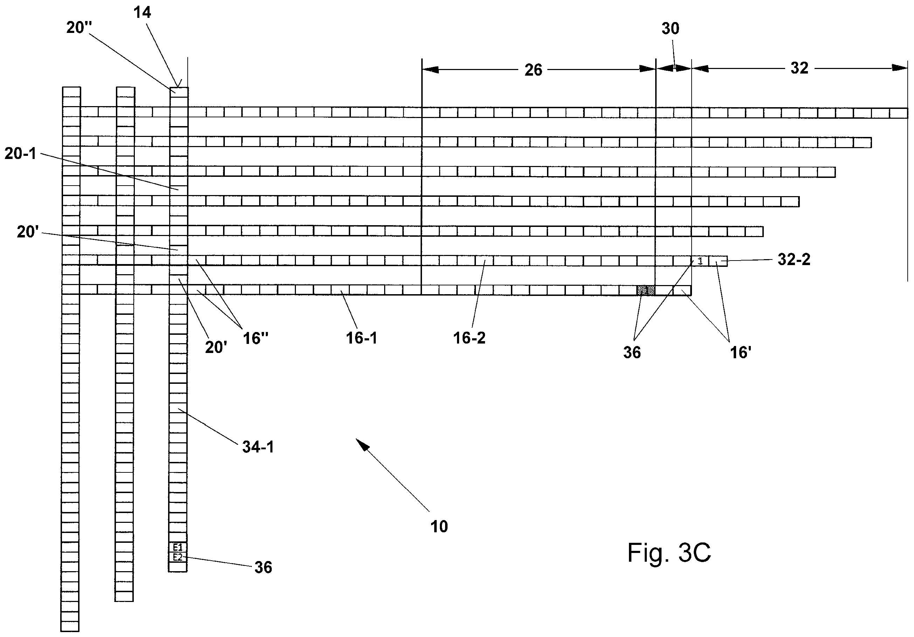

Die Fig. 3C zeigt die Vorrichtung 10 beim "Takt 2". Das Fenster 36 der horizontal verlaufenden Transportbahn 16-1 gelangt an deren wareneingangsseitigen Ende 16' in den Lagerbereich 26. Wenn das Fenster 36 an einem Lagerkanal des Lager- oder Durchlaufregals 19 mit der vorgesehenen Ware 12 vorbeikommt, wird die Ware 12 aus dem Lagerkanal von dem Fenster 36 der horizontal verlaufenden Transportbahn 16-1 vereinzelt aufgenommen bzw. in das Fenster 36 eingeschleust. Das Fenster 36 ist mit der Ware 12 belegt und daher nun grau hinterlegt. Gleichzeitig wird in der Transportbahnverlängerung 34-1, welche der vertikal verlaufenden Transportbahn 20-1 vorgeordnet ist, ein zweites Fenster 36, das mit "E2" bezeichnet ist, für die Ware 12 der Transportbahn 16-2 reserviert.

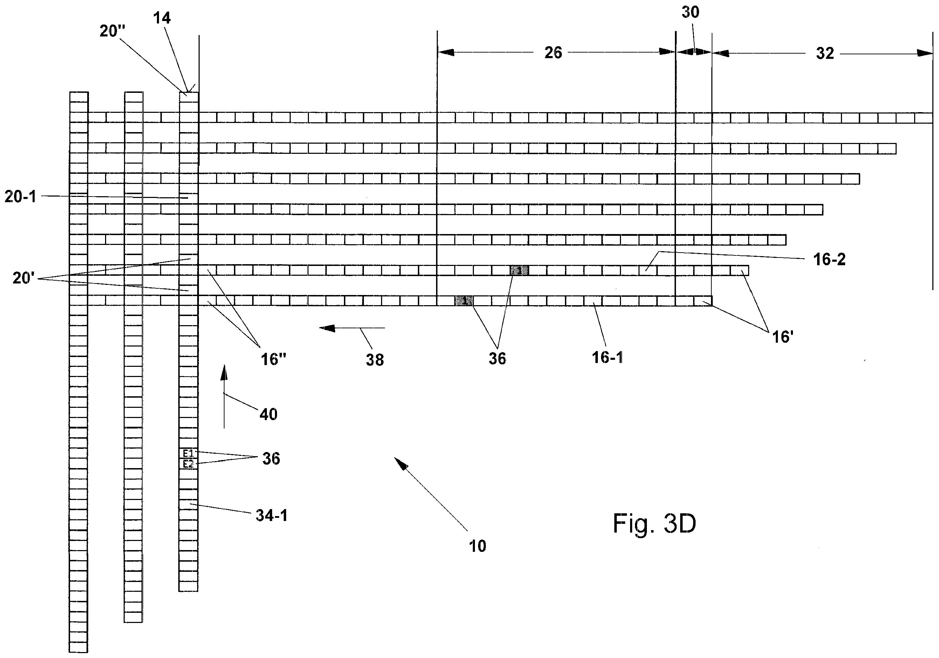

Die Fig. 3D zeigt die Vorrichtung 10 beim "Takt 13". Das Fenster 36 der horizontal verlaufenden Transportbahn 16-2 wurde aus der Transportbahnverlängerung 32-2 in den Lagerbereich 26 überführt und ist dort zwischenzeitlich ebenfalls mit einer Ware 12 belegt. Die zwei Fenster 36 der horizontal verlaufenden Transportbahnen 16-1, 16-2 werden mit der jeweiligen Ware 12 von deren wareneingangsseitigen Ende 16' zu deren ausgangsseitigen Ende 16" in Förderrichtung gemäß Pfeil 38 bewegt. Die Fenster 36 sind mit jeweils einer Ware 12 bestückt und demzufolge grau hinterlegt. Gleichzeitig werden die zwei Fenster 36, die mit "E1" und "E2" bezeichnet sind, in Transportbahnverlängerung 34-1 der vertikal verlaufenden Transportbahn 20-1 in Förderrichtung gemäß Pfeil 40 auf deren wareneingangsseitiges Ende 20' zugeführt.

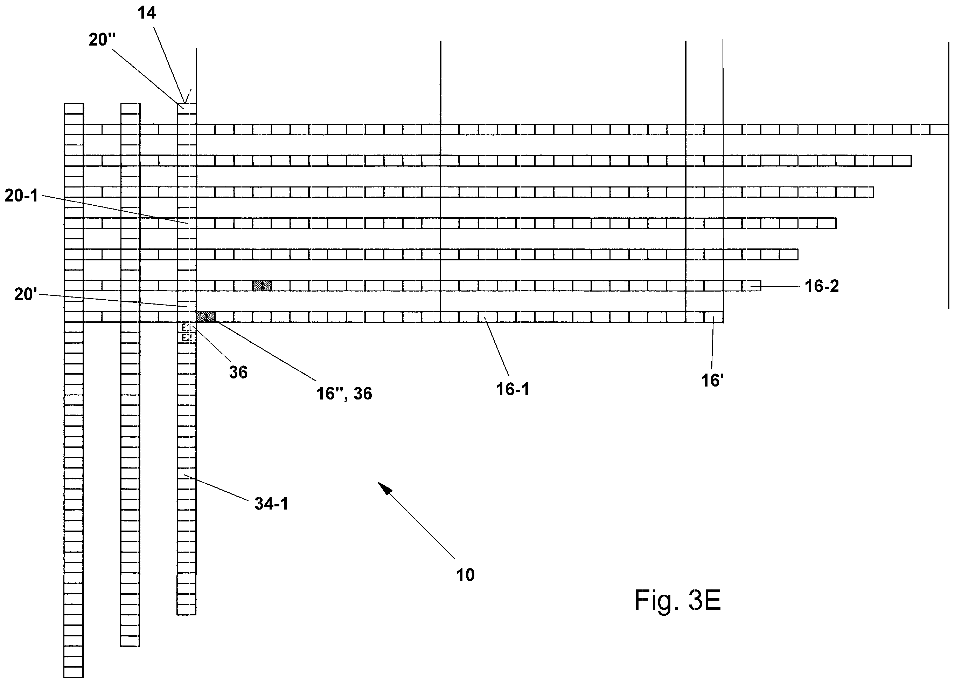

Die Fig. 3E zeigt die Vorrichtung 10 beim "Takt 27". Die Ware 12 in der Transportbahn 16-1 befindet sich am warenausgangsseitigen Ende 16" der Transportbahn 16-1, das dem wareneingangsseitigen Ende 20' der vertikal verlaufenden Transportbahn 20-1 zugeordnet ist. Das Fenster 36, das mit "E1" bezeichnet und für die Ware 12 der Transportbahn 16-1 reserviert ist, erreicht auf der Transportbahnverlängerung 34-1 gleichzeitig das wareneingangsseitige Ende 20" der Transportbahn 20-1, das dem warenausgangsseitigen Ende 16" der Transportbahn 16-1 zugeordnet ist. Das Fenster 36 mit der Ware 12 und das Fenster 36, das mit "E1" bezeichnet ist, stehen für die Übergabe, d.h. für die Abgabe bzw. Aufnahme, bereit.

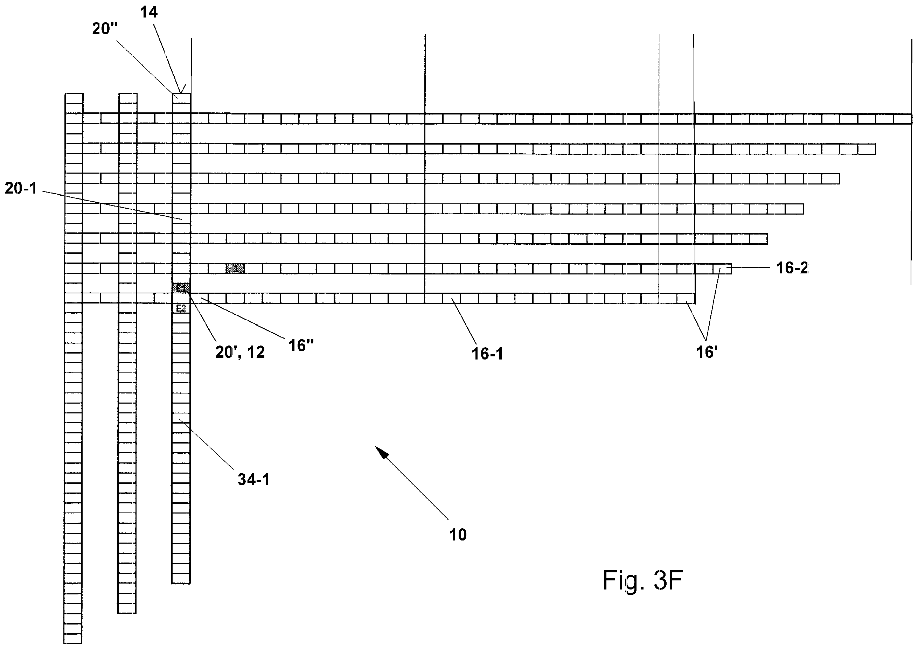

Die Fig. 3F zeigt die Vorrichtung 10 beim "Takt 28". Die Ware 12 wird aus dem warenausgangsseitigen Ende 16" der Transportbahn 16-1 an das wareneingangsseitige Ende 20' der Transportbahn 20-1 übergeben, d.h. wird von dem warenausgangsseitigen Ende 16" der Transportbahn 16-1 abgegeben und von dem wareneingangsseitigen Ende 20' der Transportbahn 20-1 aufgenommen. Das Fenster 36 in der horizontal verlaufenden Transportbahn 16 wird gelöscht.

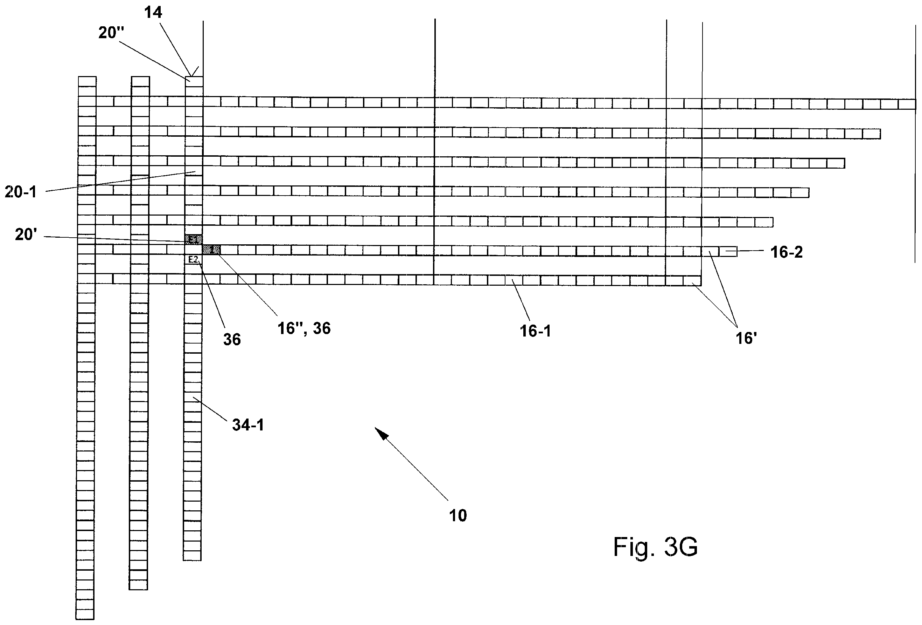

Die Fig. 3G zeigt die Vorrichtung 10 beim "Takt 30". Die Ware 12 in der Transportbahn 16-2 befindet sich am warenausgangsseitigen Ende 16" der Transportbahn 16-2, das dem wareneingangsseitigen Ende 20' der vertikal verlaufenden Transportbahn 20-1 zugeordnet ist. Am wareneingangsseitigen Ende 20' befindet sich gerade das Fenster 36 mit der Ware 12 aus der Transportbahn 16-1, das mit "E1" bezeichnet ist. Das Fenster 36, das mit "E2" bezeichnet und für die Ware 12 der Transportbahn 16-2 reserviert ist, erreicht das wareneingangsseitige Ende 20" der Transportbahn 20-1, das dem warenausgangsseitigen Ende 16" der Transportbahn 16-2 zugeordnet ist. Das Fenster 36 mit der Ware 12 und das Fenster 36, das mit "E2" bezeichnet ist, stehen für die Übergabe, d.h. für die Abgabe bzw. Aufnahme, bereit.

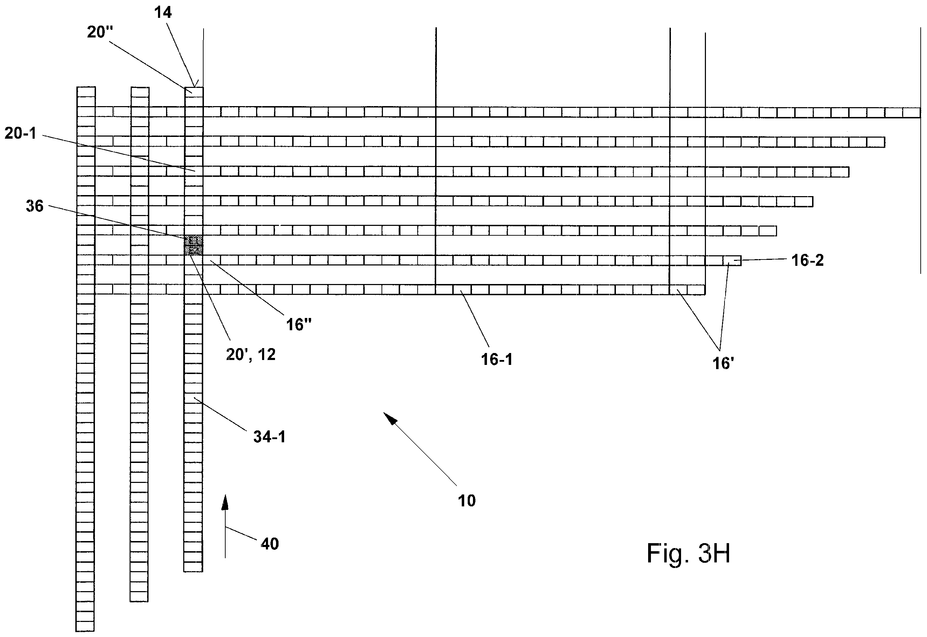

Die Fig. 3H zeigt die Vorrichtung 10 beim "Takt 31". Die Ware 12 wird aus dem warenausgangsseitigen Ende 16" der Transportbahn 16-2 an das wareneingangsseitige Ende 20' der Transportbahn 20-1 übergeben, d.h. wird von dem warenausgangsseitigen Ende 16" der Transportbahn 16-2 abgegeben und von dem wareneingangsseitigen Ende 20' der Transportbahn 20-1 aufgenommen. Das Fenster 36 in der horizontal verlaufenden Transportbahn 16-2 wird gelöscht. Die zwei Waren 12 sind jetzt reihenfolgerichtig in den Fenstern 36 der vertikal verlaufenden Transportbahn 20-1, die mit "E1" und E2" bezeichnet sind, eingebracht und werden in dieser Reihenfolge zu dem warenausgangsseitigen Ende 20" der Transportbahn 20-1 vertikal nach oben in Förderrichtung gemäß Pfeil 40 zu dem zugeordneten Palettierplatz 14 bewegt und an den Palettierplatz 14 abgegeben.

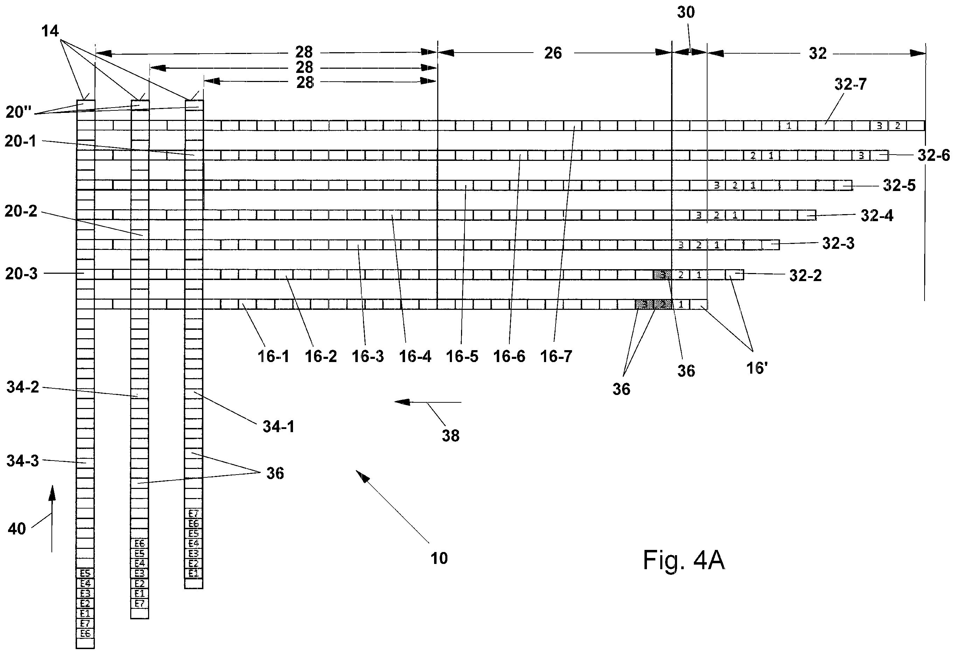

In den Fig. 4A bis 4C ist ein Transport von jeweils drei Waren 12 über sämtliche sieben horizontal verlaufenden Transportbahnen 16-1, 16-2, 16-3, 16-4, 16-5, 16-6, 16-7 und die drei vertikal verlaufenden Transportbahnen 20-1, 20-2, 20-3 zu den diesen jeweils zugeordneten Palettierplätzen 14 schematisch dargestellt.

Die Fig. 4A zeigt die Vorrichtung 10 beim "Takt 7". Zum Starten der sieben Waren 12 für jeden der drei vertikal verlaufenden Transportbahnen 20-1, 20-2, 20-3 werden 7 Takte benötigt. Das Fenster 36 der horizontal verlaufenden Transportbahn 16-1, das für die Transportbahn 20-3 bestimmt ist, ist bereits mit der Ware 12 belegt und wird auf das warenausgangsseitige Ende 16" der Transportbahn 16-1, das dem wareneingangsseitigen Ende 20' der Transportbahn 20-3 zugeordnet ist, hinzubewegt. Das Fenster 36 ist mit "3" bezeichnet. Ein zweites Fenster 36 der horizontal verlaufenden Transportbahn 16-1, das für die Transportbahn 20-2 bestimmt ist und dem für die Transportbahn 20-3 bestimmten Fenster 36 unmittelbar nachfolgt, gelangt an deren wareneingangsseitigen Ende 16' in den Lagerbereich 26. Wenn das Fenster 36 an einem Lagerkanal des Lager- oder Durchlaufregals 19 mit der vorgesehenen Ware 12 vorbeikommt, wird eine Ware 12, die für die vertikal verlaufende Transportbahn 20-2 bestimmt ist, aus dem Lagerkanal von dem Fenster 36 der horizontal verlaufenden Transportbahn 16-1 vereinzelt aufgenommen bzw. in das Fenster 36 eingeschleust. Das Fenster 36 ist mit "2" bezeichnet. Die zwei Fenster 36 sind mit der Ware 12 belegt und daher grau hinterlegt.

Ein weiteres Fenster 36 der horizontal verlaufenden Transportbahn 16-2, das für die Transportbahn 20-3 bestimmt ist, gelangt an deren wareneingangsseitigen Ende 16' in den Lagerbereich 26. Wenn das Fenster 36 an einem Lagerkanal des Lager- oder Durchlaufregals 19 mit der vorgesehenen Ware 12 vorbeikommt, wird eine Ware 12, die für die vertikal verlaufende Transportbahn 20-3 bestimmt ist, aus dem Lagerkanal von dem Fenster 36 der horizontal verlaufenden Transportbahn 16-2 vereinzelt aufgenommen bzw. in das Fenster 36 eingeschleust. Das Fenster 36 ist mit "3" bezeichnet. Das Fenster 36 ist mit der Ware 12 belegt und daher grau hinterlegt.

Weiterhin sind zwei Fenster 36 der horizontal verlaufenden Transportbahn 16-2, zwei Fenster 36 der horizontal verlaufenden Transportbahn 16-3 und ein Fenster 36 der horizontal verlaufenden Transportbahn 16-4 jeweils im Startanlaufbereich 30, ein Fenster 36 der Transportbahnverlängerung 32-3, zwei Fenster 36 der Transportbahnverlängerung 32-4 und jeweils drei Fenster der Transportbahnverlängerungen 32-5, 32-6, 32-7, welche den horizontal verlaufenden Transportbahnen 16-3, 16-4, 16-5, 16-6, 16-7 vorgeordnet sind, für eine Ware 12 gestartet. Die Fenster 36 der horizontal verlaufenden Transportbahnen 16-5, 16-6, 16-7, die für die vertikal verlaufenden Transportbahnen 20-3, 20-2, 20-1 bestimmt und mit "3", "2" und "1" bezeichnet sind, sind zuerst gestartet. Die Fenster 36 der horizontal verlaufenden Transportbahnen 16-1, 16-6, 16-7, die für die vertikal verlaufenden Transportbahnen 20-1, 20-3, 20-2 bestimmt und mit "1", "3" und "2" bezeichnet sind, sind zuletzt gestartet. Die Fenster 36 sind noch leer, d.h. ohne die Ware 12, und daher weiß hinterlegt. Gleichzeitig sind in den Transportbahnverlängerungen 34-1, 34-2, 34-3, welche den vertikal verlaufenden Transportbahnen 20-1, 20-2, 20-3 vorgeordnet sind, jeweils sieben Fenster 36 in entsprechender Zahl und Reihenfolge, die mit "E1" bis "E7" bezeichnet sind, für die Waren 12 der Transportbahnen 16-1, 16-2, 16-3, 16-4, 16-5, 16-6, 16-7 reserviert.

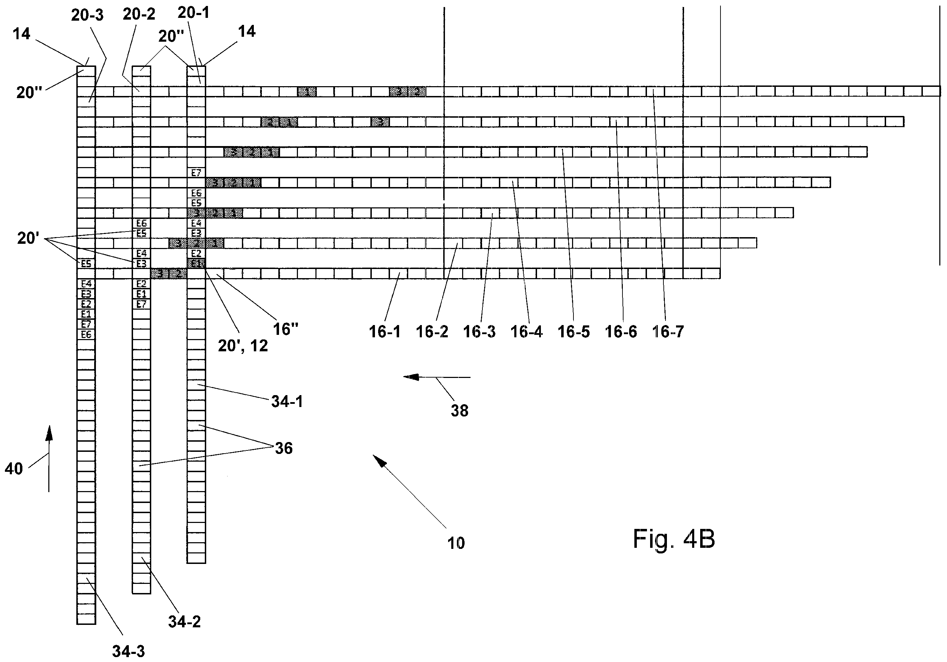

Die Fig. 4B zeigt die Vorrichtung 10 beim "Takt 34". Sämtliche Fenster 36 der Transportbahnen 16-1, 16-2, 16-3, 16-4, 16-5, 16-6, 16-7 sind mit den Waren 12 belegt und werden mit der jeweiligen Ware 12 auf den Transportbahnen 16-1, 16-2, 16-3, 16-4, 16-5, 16-6, 16-7 in Förderrichtung gemäß Pfeil 38 von deren wareneingangsseitigen Ende 16' zu deren ausgangsseitigen Ende 16" bewegt. Die Ware 12 wurde aus dem warenausgangsseitigen Ende 16" der Transportbahn 16-1 an das wareneingangsseitige Ende 20' der Transportbahn 20-1 übergeben, d.h. wurde von dem warenausgangsseitigen Ende 16" der Transportbahn 16-1 abgegeben und ist nun von dem wareneingangsseitigen Ende 20' der Transportbahn 20-1 aufgenommen. Das Fenster 36 der Transportbahn 16-1 wurde daraufhin gelöscht. Die Ware 12 des Fensters 36, das in der horizontal verlaufenden Transportbahn 16-1 für die Transportbahn 20-1 bestimmt ist und zuletzt gestartet wurde, ist somit als erste Ware 12 in das warenseitige Ende 20' der vertikal verlaufenden Transportbahn 20-1 eingefahren. Das Fenster 36 der Transportbahn 16-2 mit der Ware 12, die für die Transportbahn 20-2 bestimmt und mit "2" bezeichnet ist, durchläuft soeben die Transportbahn 20-1, um weiter zur Transportbahn 20-2 geführt zu werden. Gleiches gilt für das Fenster 36 der Transportbahn 16-3 mit der Ware 12, die für die Transportbahn 20-3 bestimmt und mit "3" bezeichnet ist. Dabei handelt es sich jeweils um ein Fenster 36', zuvor als "Leerlauffenster" bezeichnet.

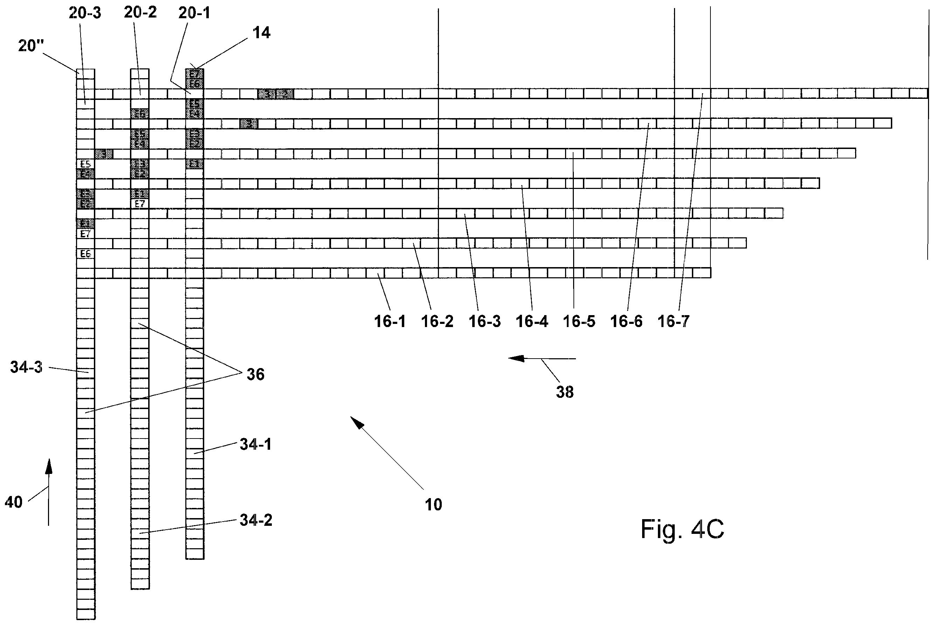

Die Fig. 4C zeigt die Vorrichtung 10 beim "Takt 41". Sämtliche Waren 12 sind aus dem warenausgangsseitigen Ende 16" der Transportbahnen 16-1, 16-2, 16-3, 16-4, 16-5, 16-6, 16-7 an das wareneingangsseitige Ende 20' der Transportbahn 20-1 übergeben, d.h. sind von dem warenausgangsseitigen Ende 16" der Transportbahnen 16-1, 16-2, 16-3, 16-4, 16-5, 16-6, 16-7 abgegeben und von dem wareneingangsseitigen Ende 20' der Transportbahn 20-1 aufgenommen. Die Fenster 36 in den horizontal verlaufenden Transportbahnen 16-1, 16-2, 16-3, 16-4, 16-5, 16-6, 16-7 sind entsprechend gelöscht. Die Waren 12 sind jetzt reihenfolgerichtig in die vertikal verlaufende Transportbahn 20-1 eingebracht und werden in dieser Reihenfolge zu dem warenausgangsseitigen Ende 20" der Transportbahn 20-1 vertikal nach oben in Förderrichtung gemäß Pfeil 40 zu dem zugeordneten Palettierplatz 14 bewegt und an den Palettierplatz 14 abgegeben.

In der vertikal verlaufenden Transportbahn 20-2 fehlt noch die Ware 12 aus dem Fenster 36 der horizontal verlaufenden Transportbahn 16-7, das mit "2" bezeichnet ist. Die Ware 12 wird das reservierte Fenster 36 der Transportbahn 20-2, das mit "E7" bezeichnet ist, erst ganz zum Schluss erreichen bzw. von diesem zuletzt aufgenommen.

Die Ware 12 aus dem Fenster 36 der Transportbahn 16-5, das mit "3" bezeichnet ist, hat soeben das warenausgangseitige Ende 16" der Transportbahn 16-5 erreicht. Das reservierte Fenster 36 der Transportbahn 20-3, das mit "E5" bezeichnet ist, ist an dem wareneingangsseitigen Ende 20' der Transportbahn 20-3 angelangt. Mithin ist die Ware 12 bereit, im nächsten Takt von der Transportbahn 16-5 an die Transportbahn 20-3 übergeben zu werden.

In der vertikal verlaufenden Transportbahn 20-3 fehlen dann nur mehr die Waren 12 aus den Fenstern 36 der horizontal verlaufenden Transportbahnen 16-6, 16-7, die beide mit "3" bezeichnet sind und die Transportbahn 20-3 anschließend erreichen bzw. von dieser aufgenommen werden.

Wenn die horizontal verlaufenden Transportbahnen 16 bzw. 16-1, 16-2, 16-3, 16-4, 16-5, 16-6, 16-7 von großer Länge sind, ergeben sich zwangsläufig auch lange Wege für die Waren 12 von dem wareneingangsseitigen Ende 16', welches dem entferntesten Lagerkanal des Lager- oder Durchlaufregals 19 zugeordnet ist, bis zu den vertikal verlaufenden Transportbahnen 20. Die horizontal verlaufenden Transportbahnen 16 bzw. 16-1, 16-2, 16-3, 16-4, 16-5, 16-6, 16-7 sind daher entsprechend der Fig. 5 in zwei oder mehrere Transportbahnsegmente 22 aufgeteilt.

Im Ausführungsbeispiel der Fig. 5 sind die Transportbahnen 16 bzw. 16-1, 16-2, 16-3, 16-4, 16-5, 16-6, 16-7 jeweils in vier Transportbahnsegmente 22-1, 22-2, 22-3, 22-4 unterteilt. Die Transportbahnsegmente 22 sind vorzugsweise in Blöcken 24 bzw. Reihen angeordnet, um von dem/den Lager- oder Durchlaufregal/en 19 die Waren 12 zu erhalten. Zudem sind die Transportbahnsegmente 22 parallel nebeneinander angeordnet.

Durch eine solche Unter- bzw. Aufteilung der horizontal verlaufenden Transportbahnen 16 bzw. 16-1, 16-2, 16-3, 16-4, 16-5, 16-6, 16-7 bzw. einzelner Abschnitte der Transportbahnen 16 bzw. 16-1, 16-2, 16-3, 16-4, 16-5, 16-6, 16-7 vorzugsweise in einem Bereich, welcher dem Lagerbereich 26 etwa mit dem mehrstöckigen Lager- oder Durchlaufregal 19 zugeordnet bzw. zu diesem benachbart ist, lassen sich die von den Waren 12 zurückzulegenden Wege zwischen dem wareneingangseitigen Ende 16' der horizontal verlaufenden Transportbahnen 16 bzw. 16-1, 16-2, 16-3, 16-4, 16-5, 16-6, 16-7 und den vertikal verlaufenden Transportbahnen 16 erheblich verkürzen.

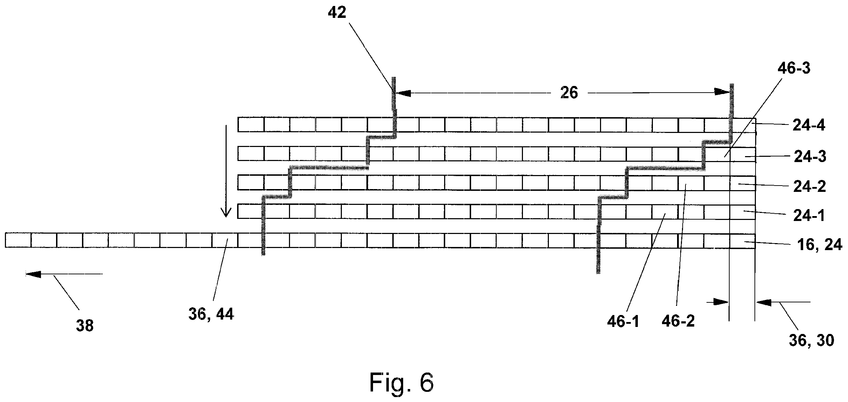

Entsprechend der Fig. 6 sind dem Block 24 bzw. der Reihe mit den horizontal verlaufenden Transportbahnen 16 bzw. 16-1, 16-2, 16-3, 16-4, 16-5, 16-6, 16-7 folglich insgesamt vier weitere Blöcke 24-1, 24-2, 24-3, 24-4 parallel benachbart zugeordnet. Der Weg 42 der Ware 12 aus dem Lagerbereich 26 eines jeden der weiteren Blöcke 24-1, 24-2, 24-3, 24-4 verlängert sich bis zu deren Zusammenführung 44 von Block 24-1 bis 24-4. Um gleiche Wege für die Waren 12 zu erhalten und für sämtliche Blöcke 24-1, 24-2, 24-3, 24-4 gleichzeitig im Startanlaufbereich 30 zu entscheiden, welches Fenster 36 zu starten ist, werden die Transportbahnsegmente 22 bzw. 22-1, 22-2, 22-3, 22-4 der horizontal verlaufenden Transportbahnen 16 der Blöcke 24-1, 24-2, 24-3, 24-4 um eine Zusammenführungsbahnverlängerung 46 bzw. Zusammenführungsbahnverlängerungen 46-1, 46-2, 46-3, 46-4 verlängert.

Eine solche Zusammenführungsbahnverlängerung 46 kann wiederum physisch und/oder durch, insbesondere computergestützte, Simulation, d.h. gedanklich oder virtuell in derselben Weise, wie zuvor im Zusammenhang mit der/den Transportbahnverlängerung/en 32, 34 beschrieben ist, erfolgen. Die Zusammenführungsbahnverlängerung/en 46 bzw. 46-1, 46-2, 46-3, 46-4 weist/weisen demnach eine Länge auf, welche der Länge zwischen dem Lagerbereich 26 der Transportbahnsegmente 22 bzw. 22-1, 22-2, 22-3, 22-4 und der Zusammenführung 44 entspricht. Die Zusammenführungsbahnverlängerung/en 46 bzw. 46-1, 46-2, 46-3, 46-4 kann/können ebenso aus einer Anzahl von zusätzlichen Fenstern 36 gebildet sein, welche genau der Anzahl von Fenstern 36 zwischen dem Lagerbereich 26 der Transportbahnsegmente 22 bzw. 22-1, 22-2, 22-3, 22-4 und der Zusammenführung 44 entspricht. Die Zusammenführungsbahnverlängerung 46 bzw. 46-1, 46-2, 46-3, 46-4 ist dem wareneingangsseitigen Ende 16' der Transportbahnsegmente 22 bzw. 22-1, 22-2, 22-3, 22-4, an welchem die Ware 12 aufnehmbar ist, vorgeordnet.

Die Zusammenführungsbahnverlängerung 46 entspricht dem Unterschied des Weges 42 der Waren 12 zwischen dem Lagerbereich 26 der Transportbahnen 16 eines jeweiligen Blockes 24-1, 24-2, 24-3, 24-4 und der Zusammenführung 44. Der Block 24-1 muss dabei die längste Zusammenführungsbahnverlängerung 46 aufweisen, da der Weg 42 zwischen dem Lagerbereich 26 der Transportbahnen 16 des Blockes 24-1 und der Zusammenführung 44 am kürzesten ist.

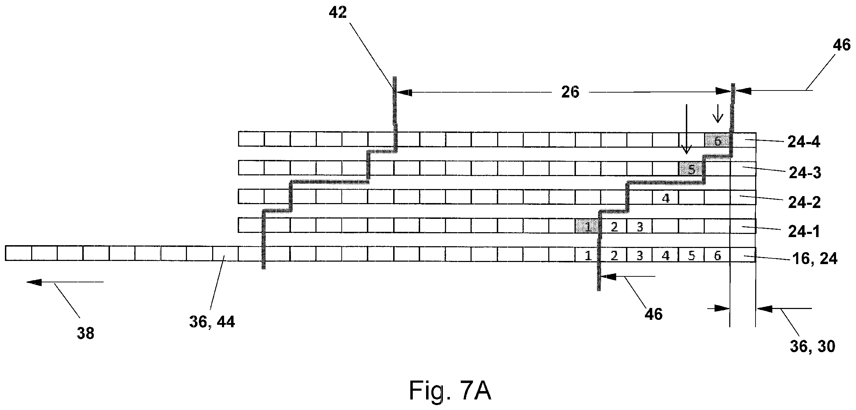

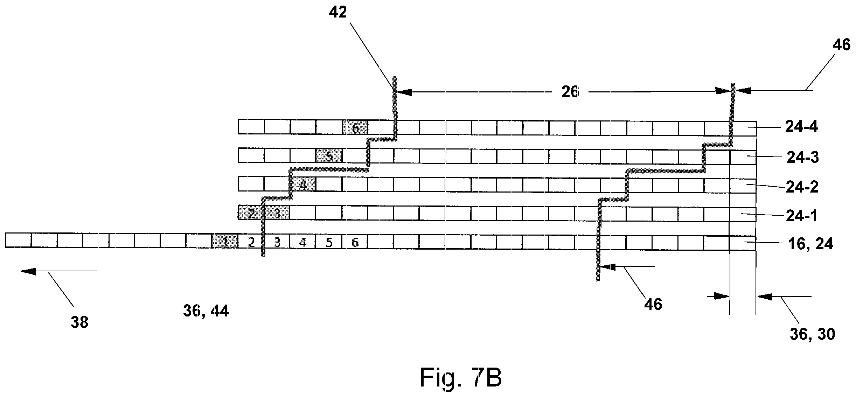

In den Fig. 7A und 7B ist ein Transport von sechs Waren 12, die über sämtliche vier Blöcke 24-1, 24-2, 24-3, 24-4 einer Ebene verteilt sind, zu der Zusammenführung 44 schematisch dargestellt.

Die Fig. 7A zeigt die Vorrichtung 10 beim "Takt 1". Zum Starten der sechs Waren 12 für jeden der vier Blöcke 24-1, 24-2, 24-3, 24-4 werden sechs Fenster 36 der horizontal verlaufenden Transportbahn 16 einer Ebene belegt. Die Fenster 36 der Blöcke 24-1, 24-3, 24-4 sind bereits mit der Ware 12 befüllt und werden auf den zugeordneten Transportbahnen zu der Zusammenführung 44 bewegt. Die drei Fenster 36 sind daher grau hinterlegt. Weiterhin sind zwei Fenster 36 von Block 24-1 und ein Fenster 36 von Block 24-2 gestartet. Diese Fenster befinden sich noch allesamt in der Zusammenführungsbahnverlängerung 46-1, 46-2 des jeweiliges Blockes 24-1, 24-2. Die Fenster 36 sind noch leer, d.h. ohne die Ware 12, und weiß hinterlegt.

Die Fig. 7B zeigt die Vorrichtung 10 beim "Takt 15". Die Ware 12 aus dem Fenster 36 des Blockes 24-1, das mit "1" bezeichnet ist, ist bereits an der Zusammenführung 44 angekommen. Die Ware 12 fährt in das Fenster 36 der horizontal verlaufenden Transportbahn 16 der zugeordneten Ebene ein. Die Waren 12 aus den weiteren Fenstern 36 der Blöcke 24-1, 24-2, 24-3, 24-4 werden in die Zusammenführung 44 jeweils nachfolgend in den nächsten fünf Takten eingeschleust.

Die vorliegende Erfindung ist nicht auf die dargestellten Ausführungsformen der Vorrichtung 10 beschränkt. So ist es ohne weiteres möglich, die Vorrichtung 10 abweichend von den vorstehend beschriebenen Ausführungsformen mit beliebig vielen solcher horizontal und vertikal verlaufender Transportbahnen 16, 20, und Palettierplätzen 14 entsprechend der Wünsche und Vorgaben eines Betreibers einer solchen Vorrichtung 10 und der jeweils anzutreffenden räumlichen Gegebenheiten vorzusehen. Auch kann der Abstand zwischen einander jeweils benachbarten bzw. übereinander und/oder nebeneinander angeordneten, horizontal und vertikal verlaufenden Transportbahnen 16, 20 beliebig und individuell gewählt werden. Alternativ oder kumulativ zu den Transportbahnsegmenten 22 bzw. 22-1, 22-2, 22-3, 22-4 ist es ebenfalls denkbar, mindestens eine oder zwei weitere horizontal oder im Wesentlichen horizontal verlaufende und übereinander angeordnete Transportbahn/en 16 neben den mindestens zwei horizontal verlaufenden Transportbahnen 16 anzuordnen und mit den Transportbahnen 16 zusammenzuführen. Hierdurch lassen sich die Wege der Waren 12 gleichsam verkürzen. Schließlich ist es auch denkbar, die Vorrichtung 10 nach der Erfindung durch eine Kombination von physischer Ausgestaltung einerseits und, vorzugsweise computergestützten, Simulation der Transportbahnverlängerungen 32, 34 bzw. sogenannter gedanklicher oder auch quasi fiktiver Verlängerung andererseits auszubilden.

## Patentansprüche

1. Anordnung mit einer Vorrichtung (10) zur reihenfolgerichtigen Kommissionierung und Bereitstellung von Waren (12), insbesondere von quaderförmigem Stückgütern, wie Behältern, Kartons oder (Getränke-)Kisten, und mit wenigstens einem Palettierplatz (14), umfassend mindestens zwei horizontal oder im Wesentlichen horizontal verlaufende und übereinander angeordnete Transportbahnen (16; 16-1, 16-2, 16-3, 16-4, 16-5, 16-6, 16-7), durch welche die Waren (12) an einem wareneingangsseitigen Ende (16') der mindestens zwei horizontal verlaufenden Transportbahnen (16; 16-1, 16-2, 16-3, 16-4, 16-5, 16-6, 16-7) vereinzelt aufnehmbar und zu einem warenausgangsseitigen Ende (16") der mindestens zwei horizontal verlaufenden Transportbahnen (16; 16-1, 16-2, 16-3, 16-4, 16-5, 16-6, 16-7) bewegbar sind, **gekennzeichnet durch** mindestens eine vertikal oder im Wesentlichen vertikal verlaufende Transportbahn (20; 20-1, 20-2, 20-3), an welche die Waren (12), zur Bewegung vertikal nach oben in Förderrichtung (40), von dem warenausgangsseitigen Ende (16") der mindestens zwei horizontal verlaufenden Transportbahnen (16; 16-1, 16-2, 16-3, 16-4, 16-5, 16-6, 16-7) an ein wareneingangsseitiges Ende (20') der mindestens einen vertikal verlaufenden Transportbahn (20; 20-1, 20-2, 20-3) übergebbar, in welcher die Waren (12) von den mindestens zwei horizontal verlaufenden Transportbahnen (16; 16-1, 16-2, 16-3, 16-4, 16-5, 16-6, 16-7) zusammenführbar und von der mindestens einen vertikal verlaufenden Transportbahn (20; 20-1, 20-2, 20-3) zu einem warenausgangseitigen Ende (20") der mindestens einen vertikalen Transportbahn (20; 20-1, 20-2, 20-3), welches dem einen Palettierplatz (14) oder einem der Palettierplätze (14) zugeordnet ist, vertikal nach oben in Förderrichtung (40) zu dem zugeordneten Palettierplatz (14) bewegbar und an den Palettierplatz (14) abgebbar sind, wobei die sämtlichen horizontal oder im Wesentlichen horizontal verlaufenden Transportbahnen (16; 16-1, 16-2, 16-3, 16-4, 16-5, 16-6, 16-7) und die mindestens eine vertikal oder im Wesentlichen vertikal verlaufende Transportbahn (20; 20-1, 20-2, 20-3) derart ausgebildet sind, dass der Weg einer Ware (12) von dem wareneingangsseitigen Ende (16') jeder der mindestens zwei horizontal verlaufenden Transportbahnen (16; 16-1, 16-2, 16-3, 16-4, 16-5, 16-6, 16-7) zu dem warenausgangseitigen Ende (20") einer der mindestens einen vertikalen Transportbahn (20; 20-1, 20-2, 20-3) des zugeordneten Palettierplatzes (14) von gleicher Länge ist.

2. Anordnung nach Anspruch 1, **dadurch gekennzeichnet, dass** die mindestens zwei horizontal oder im Wesentlichen horizontal verlaufenden Transportbahnen (16; 16-1, 16-2, 16-3, 16-4, 16-5, 16-6, 16-7) und die mindestens eine vertikal oder im Wesentlichen vertikal verlaufende Transportbahn (20; 20-1, 20-2, 20-3) durch bauliche Ausgestaltung verlängert sind.

3. Anordnung nach Anspruch 1 oder 2, **dadurch gekennzeichnet, dass** die obere Transportbahn (16-2, 16-3, 16-4, 16-5, 16-6, 16-7) gegenüber der unteren Transportbahn (16-1, 16-2, 16-3, 16-4, 16-5, 16-6) von den mindestens zwei horizontal oder im Wesentlichen horizontal verlaufenden Transportbahnen (16; 16-1, 16-2, 16-3, 16-4, 16-5, 16-6, 16-7), die unmittelbar übereinander benachbart angeordnet sind, um eine Transportbahnverlängerung (32-2, 32-3, 32-4, 32-5, 32-6, 32-7) mit einer Länge, welche der Länge der vertikal verlaufenden Transportbahn (20; 20-1, 20-2, 20-3) zwischen dem warenausgangsseitigen Ende (16") der unteren Transportbahn (16-1, 16-2, 16-3, 16-4, 16-5, 16-6) und dem warenausgangsseitigen Ende (16") der oberen Transportbahn (16-2, 16-3, 16-4, 16-5, 16-6, 16-7) entspricht, verlängert ist, wobei die Transportbahnverlängerung (32-2, 32-3, 32-4, 32-5, 32-6, 32-7) dem wareneingangsseitigen Ende (16') der oberen Transportbahn (16-2, 16-3, 16-4, 16-5, 16-6, 16-7), an welchem die Ware (12) aufnehmbar ist, vorgeordnet ist.

4. Anordnung nach einem der Ansprüche 1 bis 3, **dadurch gekennzeichnet, dass** die mindestens eine vertikal oder im Wesentlichen vertikal verlaufende Transportbahn (20; 20-1, 20-2, 20-3) um eine Transportbahnverlängerung (34-1, 34-2, 34-3) mit einer Länge, welche der Länge der horizontal oder im Wesentlichen horizontal verlaufenden Transportbahn (16; 16-1, 16-2, 16-3, 16-4, 16-5, 16-6, 16-7), die dem wareneingangsseitigen Ende (20') der vertikalen Transportbahn (20; 20-1, 20-2, 20-3) zugeordnet ist, von deren wareneingangsseitigen Ende (16') zu deren warenausgangseitigen Ende (16") entspricht, verlängert ist, wobei die Transportbahnverlängerung (34-1, 34-2, 34-3) dem wareneingangsseitigem Ende (20') der vertikal verlaufenden Transportbahn, an welches die Ware (12) von dem warenausgangsseitigen Ende (16") der zugeordneten horizontal verlaufenden Transportbahn (16; 16-1, 16-2, 16-3, 16-4, 16-5, 16-6, 16-7) übergebbar ist, vorgeordnet ist.

5. Anordnung nach Anspruch 1, **dadurch gekennzeichnet, dass** die mindestens zwei horizontal oder im Wesentlichen horizontal verlaufenden Transportbahnen (16; 16-1, 16-2, 16-3, 16-4, 16-5, 16-6, 16-7) und die zwei oder mehreren vertikalen oder im Wesentlichen vertikal verlaufenden Transportbahnen (20; 20-1, 20-2, 20-3) jeweils zueinander im Wesentlichen baugleich ausgebildet und durch eine, insbesondere computergestützte, Einrichtung zur Simulation verlängerbar sind.

6. Anordnung nach einem der Ansprüche 1 bis 5, **dadurch gekennzeichnet, dass** die mindestens zwei horizontal oder im Wesentlichen horizontal verlaufenden Transportbahnen (16; 16-1, 16-2, 16-3, 16-4, 16-5, 16-6, 16-7) und die mindestens eine vertikal oder im Wesentlichen vertikal verlaufende Transportbahn (20; 20-1, 20-2, 20-3) in zur Aufnahme jeweils einer Ware (12) vorgesehene und in Förderrichtung kontinuierlich bewegbare Fenster (36) von gleicher Anzahl unterteilt sind.

7. Anordnung nach Anspruch 6, **dadurch gekennzeichnet, dass** die obere Transportbahn (16-2, 16-3, 16-4, 16-5, 16-6, 16-7) gegenüber der unteren Transportbahn (16-1, 16-2, 16-3, 16-4, 16-5, 16-6) von den mindestens zwei horizontal oder im Wesentlichen horizontal verlaufenden Transportbahnen (16; 16-1, 16-2, 16-3, 16-4, 16-5, 16-6, 16-7), die unmittelbar übereinander benachbart angeordnet sind, um eine Anzahl von zusätzlichen Fenstern (36), welche genau der Anzahl von Fenstern (36) der vertikal verlaufenden Transportbahn (20; 20-1, 20-2, 20-3) zwischen dem warenausgangsseitigen Ende (16") der unteren Transportbahn (16-1, 16-2, 16-3, 16-4, 16-5, 16-6) und dem warenausgangsseitigen Ende (16") der oberen Transportbahn (16-2, 16-3, 16-4, 16-5, 16-6, 16-7) entspricht, verlängert ist, wobei die zusätzlichen Fenster (36) zur Transportbahnverlängerung (32-2, 32-3, 32-4, 32-5, 32-6, 32-7) dem wareneingangsseitigen Ende (16') der oberen Transportbahn (16-2, 16-3, 16-4, 16-5, 16-6, 16-7), an welchem die Ware (12) aufnehmbar ist, vorgeordnet sind.

8. Anordnung nach einem der Ansprüche 6 oder 7, **dadurch gekennzeichnet, dass** die mindestens eine vertikal oder im Wesentlichen vertikal verlaufende Transportbahn (20; 20-1, 20-2, 20-3) zur Transportbahnverlängerung (34-1, 34-2, 34-3) um eine Anzahl von zusätzlichen Fenstern (36), welche genau der Anzahl von Fenstern (36) der horizontal verlaufenden Transportbahn (16; 16-1, 16-2, 16-3, 16-4, 16-5, 16-6, 16-7), die dem wareneingangsseitigen Ende (20') der vertikalen Transportbahn (20; 20-1, 20-2, 20-3) zugeordnet ist, von deren wareneingangsseitigen Ende (16') zu deren warenausgangseitigen Ende (16") entspricht, verlängert ist, wobei die zusätzlichen Fenster (36) dem wareneingangsseitigem Ende (20') der vertikal verlaufenden Transportbahn (20; 20-1, 20-2, 20-3), an welches die Ware (12) von dem warenausgangsseitigen Ende (16") der zugeordneten horizontal verlaufenden Transportbahn (16; 16-1, 16-2, 16-3, 16-4, 16-5, 16-6, 16-7) übergebbar ist, vorgeordnet sind.

9. Anordnung nach einem der Ansprüche 1 bis 8, **dadurch gekennzeichnet, dass** die sämtlichen horizontal und vertikal verlaufenden Transportbahnen (16, 20) oder die Fenster (36) der sämtlichen horizontal und vertikal verlaufenden Transportbahnen (16, 20) von dem wareneingangsseitigen Ende der wenigstens zwei horizontal verlaufenden Transportbahnen (16; 16-1, 16-2, 16-3, 16-4, 16-5, 16-6, 16-7) bis zu dem wenigstens einen Palettierplatz (14) stetig, insbesondere mit gleicher Fördergeschwindigkeit, bewegbar sind.

10. Anordnung nach einem der Ansprüche 6 bis 9, **dadurch gekennzeichnet, dass** die Fenster (36) der sämtlichen horizontal und vertikal verlaufenden Transportbahnen (16, 20) von dem wareneingangsseitigen Ende (16') der wenigstens zwei horizontal verlaufenden Transportbahnen (16; 16-1, 16-2, 16-3, 16-4, 16-5, 16-6, 16-7) bis zu dem wenigstens einen Palettierplatz (14) eine Fensterlänge, die aus einer Taktlänge und der Fördergeschwindigkeit einstellbar ist, aufweisen.

11. Anordnung nach Anspruch 10, **dadurch gekennzeichnet, dass** die Fenster (36) eine Fensterlänge von etwa 0,1 bis 10,0 m, insbesondere von etwa 1,0 bis 3,0 m, und vorzugsweise von etwa 1,5 m aufweisen.

12. Anordnung nach einem der Ansprüche 6 bis 11, **dadurch gekennzeichnet, dass** die sämtlichen horizontal und vertikal verlaufenden Transportbahnen (16, 20) durch eine Einrichtung zur Steuerung, Erzeugung eines Taktes und einer Taktnummer sowie Zuteilung der Taktnummer an jedes Fenster (36) steuerbar sind, durch welche jedes Fenster (36) der sämtlichen horizontal und vertikal verlaufenden Transportbahnen (16, 20) von dem wareneingangsseitigen Ende (16') der wenigstens zwei horizontal verlaufenden Transportbahnen (16; 16-1, 16-2, 16-3, 16-4, 16-5, 16-6, 16-7) bis zu dem wenigstens einen Palettierplatz (14) individualisierbar ist.

13. Anordnung nach einem der Ansprüche 6 bis 12, **dadurch gekennzeichnet, dass** den sämtlichen horizontal und vertikal verlaufenden Transportbahnen (16, 20) eine Einrichtung zur Taktzählung zugeordnet ist, durch welche die Taktnummer von jedem Fenster (36) der sämtlichen horizontal und vertikal verlaufenden Transportbahnen (16, 20) von dem wareneingangsseitigen Ende (16') der wenigstens zwei horizontal verlaufenden Transportbahnen (16; 16-1, 16-2, 16-3, 16-4, 16-5, 16-6, 16-7) bis zu dem wenigstens einen Palettierplatz (14) identifizierbar ist.

14. Anordnung nach einem der Ansprüche 1 bis 13, **dadurch gekennzeichnet, dass** die mindestens zwei horizontal oder im Wesentlichen horizontal verlaufenden und übereinander angeordneten Transportbahnen (16; 16-1, 16-2, 16-3, 16-4, 16-5, 16-6, 16-7) abschnittsweise in zwei oder mehrere Transportbahnsegmente (22), insbesondere in Blöcke (24; 24-1, 24-2, 24-3, 24-4) oder Reihen, unterteilt sind.

15. Anordnung nach einem der Ansprüche 1 bis 14, **dadurch gekennzeichnet, dass** mindestens eine oder zwei weitere horizontal oder im Wesentlichen horizontal verlaufende und übereinander angeordnete Transportbahn/en (16) neben den mindestens zwei horizontal oder im Wesentlichen horizontal verlaufenden und übereinander angeordneten Transportbahnen (16; 16-1, 16-2, 16-3, 16-4, 16-5, 16-6, 16-7) angeordnet und mit den mindestens zwei horizontal verlaufenden und übereinander angeordneten Transportbahnen (16; 16-1, 16-2, 16-3, 16-4, 16-5, 16-6, 16-7) zusammenführbar ist/sind.

16. Anordnung nach Anspruch 14 oder 15, **dadurch gekennzeichnet, dass** die zwei oder mehreren Transportbahnsegmente (22) und/oder die mindestens eine oder zwei weitere/n horizontal verlaufenden und übereinander angeordnete/n Transportbahn/en (16) um eine Zusammenführungsbahnverlängerung (46; 46-1, 46-2, 46-3, 46-4) mit einer Länge, welche der Länge zwischen dem Lagerbereich (26) der Transportbahnsegmente (22) oder der/den weiteren Transportbahn/en (16) und der Zusammenführung (44) entspricht, oder um eine Anzahl von zusätzlichen Fenstern (36), welche genau der Anzahl von Fenstern (36) zwischen dem Lagerbereich (26) der Transportbahnsegmente (22) oder der/den weiteren horizontal verlaufenden Transportbahn/en (16) und der Zusammenführung (44) entspricht, verlängerbar ist/sind, wobei die Zusammenführungsbahnverlängerung (46; 46-1, 46-2, 46-3, 46-4) dem wareneingangsseitigen Ende (16') des/der Transportbahnsegmente/s (22) und/oder der/den weitere/n horizontal verlaufenden Transportbahn/en (16), an welchem die Ware (12) aufnehmbar ist, vorgeordnet ist.

17. Anordnung nach einem der Ansprüche 6 bis 16, **dadurch gekennzeichnet, dass** den sämtlichen horizontal und vertikal verlaufenden Transportbahnen (16, 20) eine Einrichtung zur Überprüfung der Taktnummer von jedem Fenster (36) zugeordnet ist, welche die Taktnummer von jedem Fenster (36) an dem wareneingangsseitigen Ende (16') der horizontal verlaufenden Transportbahnen (16; 16-1, 16-2, 16-3, 16-4, 16-5, 16-6, 16-7) mit der Taktnummer der Transportbahnsegmente (22) und/oder der mindestens einen oder zwei weiteren horizontal verlaufenden Transportbahn/en (16) im Bereich von deren Zusammenführung (44) und/oder an dem warenausgangsseitigen Ende (16") der horizontalen Transportbahnen (16; 16-1, 16-2, 16-3, 16-4, 16-5, 16-6, 16-7) mit der Taktnummer von jedem Fenster (36) an dem wareneingangsseitigen Ende (20') der mindestens einen vertikalen Transportbahn (20; 20-1, 20-2, 20-3) vergleicht.

18. Anordnung nach einem der Ansprüche 1 bis 17, **dadurch gekennzeichnet, dass** die mindestens zwei im Wesentlichen horizontal verlaufenden Transportbahnen (16; 16-1, 16-2, 16-3, 16-4, 16-5, 16-6, 16-7) von deren wareneingangsseitigen Ende (16') hin zu deren warenausgangsseitigen Ende (16") in einer Neigung mit einem Winkel von bis zu etwa 15°, insbesondere zwischen etwa 2° und 10° und vorzugsweise zwischen etwa 3 ° und 7° angeordnet sind.

19. Anordnung nach einem der Ansprüche 1 bis 18, **dadurch gekennzeichnet, dass** jedem Palettierplatz (14) mindestens eine vertikal verlaufende Transportbahn (20; 20-1, 20-2, 20-3) zugeordnet ist.

20. Anordnung nach einem der Ansprüche 1 bis 19, **dadurch gekennzeichnet, dass** die mindestens zwei horizontal verlaufenden Transportbahnen (16; 16-1, 16-2, 16-3, 16-4, 16-5, 16-6, 16-7) als, insbesondere teilweise angetriebene, Rollenbahnfördereinrichtung und/oder die mindestens eine vertikal verlaufende Transportbahn (20; 20-1, 20-2, 20-3) als lineare Hubfördereinrichtung und/oder Spiral- oder Schraubenfördereinrichtung ausgebildet ist.

21. Verfahren zur reihenfolgerichtigen Kommissionierung und Bereitstellung von Waren (12), insbesondere von quaderförmigem Stückgütern, wie Behältern, Kartons oder (Getränke-) Kisten, zu wenigstens einem oder an wenigstens einen Palettierplatz (14), insbesondere zur Verwendung einer Vorrichtung nach einem der Ansprüche 1 bis 20, wobei die Waren (12) an einem wareneingangsseitigen Ende (16') von mindestens zwei horizontal verlaufenden und übereinander angeordneten Transportbahnen (16; 16-1, 16-2, 16-3, 16-4, 16-5, 16-6, 16-7) vereinzelt aufgenommen und zu einem warenausgangsseitigen Ende (16") der mindestens zwei horizontal verlaufenden Transportbahnen (16; 16-1, 16-2, 16-3, 16-4, 16-5, 16-6, 16-7) bewegt werden, **dadurch gekennzeichnet, dass** die Waren (12) von dem warenausgangsseitigen Ende (16") der mindestens zwei horizontal verlaufenden Transportbahnen (16; 16-1, 16-2, 16-3, 16-4, 16-5, 16-6, 16-7), zur Bewegung vertikal nach oben in Förderrichtung (40), an ein wareneingangsseitiges Ende (20') mindestens einer vertikal verlaufenden Transportbahn (20; 20-1, 20-2, 20-3) übergeben, von den mindestens zwei horizontal verlaufenden Transportbahnen (16; 16-1, 16-2, 16-3, 16-4, 16-5, 16-6, 16-7) zusammengeführt und von der mindestens einen vertikal verlaufenden Transportbahn (20; 20-1, 20-2, 20-3) zu einem warenausgangseitigen Ende (20") der mindestens einen vertikalen Transportbahn (20; 20-1, 20-2, 20-3), welches dem einen Palettierplatz (14) oder einem der Palettierplätze (14) zugeordnet ist, vertikal nach oben in Förderrichtung (40) zu dem zugeordneten Palettierplatz (14) bewegt und an den Palettierplatz (14) abgegeben werden, wobei die sämtlichen horizontal oder im Wesentlichen horizontal verlaufenden Transportbahnen (16; 16-1, 16-2, 16-3, 16-4, 16-5, 16-6, 16-7) und die mindestens eine vertikal oder im Wesentlichen vertikal verlaufende Transportbahn (20; 20-1, 20-2, 20-3) derart ausgebildet werden, dass der Weg einer Ware (12) von dem wareneingangsseitigen Ende (16') jeder der mindestens zwei horizontal verlaufenden Transportbahnen (16; 16-1, 16-2, 16-3, 16-4, 16-5, 16-6, 16-7) zu dem warenausgangseitigen Ende (20") einer der mindestens einen vertikalen Transportbahn (20; 20-1, 20-2, 20-3) des zugeordneten Palettierplatzes (14) von gleicher Länge ist.

22. Verfahren nach Anspruch 21, **dadurch gekennzeichnet, dass** die mindestens zwei horizontal oder im Wesentlichen horizontal verlaufenden Transportbahnen (16; 16-1, 16-2, 16-3, 16-4, 16-5, 16-6, 16-7) und die mindestens eine vertikal oder im Wesentlichen vertikal verlaufende Transportbahn (20; 20-1, 20-2, 20-3) in zur Aufnahme jeweils einer Ware (12) vorgesehene und in Förderrichtung kontinuierlich bewegbare Fenster (36) von gleicher Anzahl unterteilt werden.

23. Verfahren nach Anspruch 22, **dadurch gekennzeichnet, dass** die obere Transportbahn (16-2, 16-3, 16-4, 16-5, 16-6, 16-7) gegenüber der unteren Transportbahn (16-1, 16-2, 16-3, 16-4, 16-5, 16-6) von den mindestens zwei horizontal oder im Wesentlichen horizontal verlaufenden Transportbahnen (16; 16-1, 16-2, 16-3, 16-4, 16-5, 16-6, 16-7), die unmittelbar übereinander benachbart angeordnet sind, um eine Anzahl von zusätzlichen Fenstern (36), welche genau der Anzahl von Fenstern (36) der vertikal verlaufenden Transportbahn (20; 20-1, 20-2, 20-3) zwischen dem warenausgangsseitigen Ende (16") der unteren Transportbahn (16-1, 16-2, 16-3, 16-4, 16-5, 16-6) und dem warenausgangsseitigen Ende (16") der oberen Transportbahn (16-2, 16-3, 16-4, 16-5, 16-6, 16-7) entspricht, verlängert wird, wobei die zusätzlichen Fenster (36) dem wareneingangsseitigen Ende der oberen Transportbahn (16-2, 16-3, 16-4, 16-5, 16-6, 16-7), an welchem die Ware (12) aufgenommen wird, vorgeordnet werden.

24. Verfahren nach Anspruch 22 oder 23, **dadurch gekennzeichnet, dass** die mindestens eine vertikal oder im Wesentlichen vertikal verlaufende Transportbahn (20; 20-1, 20-2, 20-3) um eine Anzahl von zusätzlichen Fenstern (36), welche genau der Anzahl von Fenstern (36) der horizontal oder im Wesentlichen horizontal verlaufenden Transportbahn(16; 16-1, 16-2, 16-3, 16-4, 16-5, 16-6, 16-7), die dem wareneingangsseitigen Ende (20') der vertikalen Transportbahn (20; 20-1, 20-2, 20-3) zugeordnet ist, von deren wareneingangsseitigen Ende (16') zu deren warenausgangseitigen Ende (16") entspricht, verlängert wird, wobei die zusätzlichen Fenster (36) dem wareneingangsseitigem Ende (20') der vertikal verlaufenden Transportbahn (20; 20-1, 20-2, 20-3), an welches die Ware (12) von dem warenausgangsseitigen Ende (16") der zugeordneten horizontal oder im Wesentlichen horizontal verlaufenden Transportbahn (16; 16-1, 16-2, 16-3, 16-4, 16-5, 16-6, 16-7) übergeben wird, vorgeordnet werden.

25. Verfahren nach einem der Ansprüche 21 bis 24, **dadurch gekennzeichnet, dass** die sämtlichen horizontal und vertikal verlaufenden Transportbahnen (16, 20) oder die Fenster (36) der sämtlichen horizontal und vertikal verlaufenden Transportbahnen (16, 20) von dem wareneingangsseitigen Ende (16') der wenigstens zwei horizontal verlaufenden Transportbahnen (16; 16-1, 16-2, 16-3, 16-4, 16-5, 16-6, 16-7) bis zu dem wenigstens einen Palettierplatz (14) stetig, insbesondere mit gleicher Fördergeschwindigkeit, bewegt werden.

26. Verfahren nach einem der Ansprüche 22 bis 25, **dadurch gekennzeichnet, dass** die Fenster (36) der sämtlichen horizontal und vertikal verlaufenden Transportbahnen (16, 20) von dem wareneingangsseitigen Ende (16') der wenigstens zwei horizontal verlaufenden Transportbahnen (16; 16-1, 16-2, 16-3, 16-4, 16-5, 16-6, 16-7) bis zu dem wenigstens einen Palettierplatz (14) mit einer Fensterlänge, die aus einer Taktlänge und der Fördergeschwindigkeit eingestellt wird, belegt werden.

27. Verfahren nach Anspruch 26, **dadurch gekennzeichnet, dass** die Fenster (36) mit einer Fensterlänge der von etwa 0,1 bis 10,0 m, insbesondere von etwa 1,0 bis 3,0 m, und vorzugsweise von etwa 1,5 m versehen werden.

28. Verfahren nach einem der Ansprüche 22 bis 27, **dadurch gekennzeichnet, dass** die sämtlichen horizontal und vertikal verlaufenden Transportbahnen (16, 20) durch eine Einrichtung zur Steuerung, Erzeugung eines Taktes und einer Taktnummer sowie Zuteilung der Taktnummer an jedes Fenster (36) gesteuert werden, durch welche jedes Fenster (36) der sämtlichen horizontal und vertikal verlaufenden Transportbahnen von dem wareneingangsseitigen Ende (16') der wenigstens zwei horizontal verlaufenden Transportbahnen (16; 16-1, 16-2, 16-3, 16-4, 16-5, 16-6, 16-7) bis zu dem wenigstens einen Palettierplatz (14) individualisiert wird.

29. Verfahren nach einem der Ansprüche 22 bis 28, **dadurch gekennzeichnet, dass** die Taktnummer von jedem Fenster (36) der sämtlichen horizontal und vertikal verlaufenden Transportbahnen (16, 20) von dem wareneingangsseitigen Ende (16') der wenigstens zwei horizontal verlaufenden Transportbahnen (16; 16-1, 16-2, 16-3, 16-4, 16-5, 16-6, 16-7) bis zu dem wenigstens einen Palettierplatz (14) durch eine Einrichtung zur Taktzählung identifiziert wird.

30. Verfahren nach einem der Ansprüche 21 bis 29, **dadurch gekennzeichnet, dass** die mindestens zwei horizontal verlaufenden Transportbahnen (16; 16-1, 16-2, 16-3, 16-4, 16-5, 16-6, 16-7) abschnittsweise in zwei oder mehrere Transport-bahnsegmente (22), insbesondere in Blöcke (24; 24-1, 24-2, 24-3, 24-4) oder Reihen, unterteilt werden.

31. Verfahren nach einem der Ansprüche 21 bis 30, **dadurch gekennzeichnet, dass** mindestens eine oder zwei weitere horizontal oder im Wesentlichen horizontal verlaufende und übereinander angeordnete Transportbahn/en (16) neben den mindestens zwei horizontal verlaufenden Transportbahnen (16; 16-1, 16-2, 16-3, 16-4, 16-5, 16-6, 16-7) angeordnet und mit den mindestens zwei horizontal verlaufenden Transportbahnen (16; 16-1, 16-2, 16-3, 16-4, 16-5, 16-6, 16-7) zusammengeführt wird/werden.

32. Verfahren nach Anspruch 30 oder 31, **dadurch gekennzeichnet, dass** die zwei oder mehreren Transportbahnsegmente (22) und/oder die mindestens eine oder zwei weitere/n horizontal verlaufende/n und übereinander angeordnete/n Transportbahn/en (16) um eine Zusammenführungsbahnverlängerung (46; 46-1, 46-2, 46-3, 46-4) mit einer Länge, welche der Länge zwischen dem Lagerbereich (26) der Transportbahnsegmente (22) oder der/den weiteren Transportbahn/en (16) und der Zusammenführung (44) entspricht, oder um eine Anzahl von zusätzlichen Fenstern (36), welche genau der Anzahl von Fenstern (36) zwischen dem Lagerbereich (26) der Transportbahnsegmente (22) oder der/den weiteren horizontal verlaufenden Transportbahn/en (16) und der Zusammenführung (44) entspricht, verlängert wird/werden, wobei die Zusammenführungsbahnverlängerung (46; 46-1, 46-2, 46-3, 46-4) dem wareneingangsseitigen Ende (16') des/der Transportbahnsegmente/s (22) und/oder der/den weitere/n horizontal verlaufenden Transportbahn/en (16), an welchem die Ware (12) aufnehmbar ist, vorgeordnet wird.

33. Verfahren nach einem der Ansprüche 21 bis 32, **dadurch gekennzeichnet, dass** die Taktnummer von jedem Fenster (36) an dem wareneingangsseitigen Ende (16') der horizontal verlaufenden Transportbahnen (16; 16-1, 16-2, 16-3, 16-4, 16-5, 16-6, 16-7) mit der Taktnummer der Transportbahnsegmente (22) und/oder der mindestens einen oder zwei weiteren horizontal verlaufenden Transportbahn/en im Bereich von deren Zusammenführung (44) und/oder an dem warenausgangsseitigen Ende (16") der horizontalen Transportbahnen (16; 16-1, 16-2, 16-3, 16-4, 16-5, 16-6, 16-7) mit der Taktnummer von jedem Fenster (36) an dem wareneingangsseitigen Ende (20') der mindestens einen vertikalen Transportbahn (20; 20-1, 20-2, 20-3) durch eine Einrichtung zur Überprüfung der Taktnummer von jedem Fenster (36) verglichen wird.

34. Computerprogramm zur reihenfolgerichtigen Kommissionierung und Bereitstellung von Waren (12), wobei das Programm einen Computer veranlasst, Befehle auszuführen, so dass die Anordnung nach einem der Ansprüche 1 bis 20 die Verfahrensschritte nach einem der Ansprüche 21 bis 33 ausführt, wenn das Programm auf dem Computer ausgeführt wird.

## Claims

1. Arrangement with a device (10) for picking and provision of goods (12) in the correct sequence, in particular of cubic piece goods, such as containers, cartons or (beverage) crates, and with at least one palletising station (14), comprising at least two horizontally or essentially horizontally running transport lanes (16; 16-1, 16-2, 16-3, 16-4, 16-5, 16-6, 16-7) arranged on top of each other, through which the goods (12) can be taken up separately at an inbound-goods end (16') of the at least two horizontally running transport lanes (16; 16-1, 16-2, 16-3, 16-4, 16-5, 16-6, 16-7) and moved to an outbound-goods end (16") of the at least two horizontally running transport lanes (16; 16-1, 16-2, 16-3, 16-4, 16-5, 16-6, 16-7), **characterized by** at least one vertically or essentially vertically running transport lane (20; 20-1, 20-2, 20-3), to which the goods (12) can be transferred, to be moved vertically up in the transport direction (40), from the outbound-goods end (16") of the at least two horizontally running transport lanes (16; 16-1, 16-2, 16-3, 16-4, 16-5, 16-6, 16-7) to an inbound-goods end (20') of the at least one vertically running transport lane (20; 20-1, 20-2, 20-3), in which the goods (12) from the at least two horizontally running transport lanes (16; 16-1, 16-2, 16-3, 16-4, 16-5, 16-6, 16-7) can be combined and moved by the at least one vertically running transport lane (20; 20-1, 20-2, 20-3) to an outbound-goods end (20") of the at least one vertical transport lane (20; 20-1, 20-2, 20-3) that is assigned to the one palletising station (14) or one of the palletising stations (14) vertically upwards in the transport direction (40) to the assigned palletising station (14) and transferred to the palletising station (14), with all horizontally or essentially horizontally running transport lanes (16; 16-1, 16-2, 16-3, 16-4, 16-5, 16-6, 16-7) and the at least one vertically or essentially vertically running transport lane (20; 20-1, 20-2, 20-3) being formed in such a way that the path of a piece of goods (12) from the inbound-goods end (16') of each of the at least two horizontally running transport lanes (16; 16-1, 16-2, 16-3, 16-4, 16-5, 16-6, 16-7) to the outbound-goods end (20") of one of the at least one vertical transport lanes (20; 20-1, 20-2, 20-3) of the assigned palletising station (14) is of the same length.

2. Arrangement according to claim 1, **characterized in that** the at least two horizontally or essentially horizontally running transport lanes (16; 16-1, 16-2, 16-3, 16-4, 16-5, 16-6, 16-7) and the at least one vertically or essentially vertically running transport lane (20; 20-1, 20-2, 20-3) are extended by constructional design.

3. Arrangement according to claim 1 or 2, **characterized in that** the upper transport lane (16-2, 16-3, 16-4, 16-5, 16-6, 16-7) is extended as compared to the lower transport lane (16-1, 16-2, 16-3, 16-4, 16-5, 16-6) of the at least two horizontally or essentially horizontally running transport lanes (16; 16-1, 16-2, 16-3, 16-4, 16-5, 16-6, 16-7) arranged adjacently directly on top of each other by a transport lane extension (32-2, 32-3, 32-4, 32-5, 32-6, 32-7) with a length that corresponds to the length of the vertically running transport lane (20; 20-1, 20-2, 20-3) between the outbound-goods end (16") of the lower transport lane (16-1, 16-2, 16-3, 16-4, 16-5, 16-6) and the outbound-goods end (16") of the upper transport lane (16-2, 16-3, 16-4, 16-5, 16-6, 16-7), with the transport lane extension (32-2, 32-3, 32-4, 32-5, 32-6, 32-7) being placed upstream of the inbound-goods end (16') of the upper transport lane (16-2, 16-3, 16-4, 16-5, 16-6, 16-7) at which the piece of goods (12) can be taken up.

4. Arrangement according to one of claims 1 to 3, **characterized in that** the at least one vertically or essentially vertically running transport lane (20; 20-1, 20-2, 20-3) is extended by a transport lane extension (34-1, 34-2, 34-3) with a length that corresponds to the length of the horizontally or essentially horizontally running transport lane (16; 16-1, 16-2, 16-3, 16-4, 16-5, 16-6, 16-7) that is assigned to the inbound-goods end (20') of the vertical transport lane (20; 20-1, 20-2, 20-3) from its inbound-goods end (16') to its outbound-goods end (16"), with the transport lane extension (34-1, 34-2, 34-3) being placed upstream of the inbound-goods end (20') of the vertically running transport lane to which the piece of goods (12) can be transferred from the outbound-goods end (16") of the assigned horizontally running transport lane (16; 16-1, 16-2, 16-3, 16-4, 16-5, 16-6, 16-7).

5. Arrangement according to claim 1, **characterized in that** the at least two horizontally or essentially horizontally running transport lanes (16; 16-1, 16-2, 16-3, 16-4, 16-5, 16-6, 16-7) and the two or several vertical or essentially vertically running transport lanes (20; 20-1, 20-2, 20-3) are formed essentially with the same build as each other and can be extended by an, in particular computer-supported, facility for simulation.

6. Arrangement according to one of claims 1 to 5, **characterized in that** the at least two horizontally or essentially horizontally running transport lanes (16; 16-1, 16-2, 16-3, 16-4, 16-5, 16-6, 16-7) and the at least one vertically or essentially vertically running transport lane (20; 20-1, 20-2, 20-3) are divided into windows (36) of the same number intended for taking up one piece of goods (12) each and continually movable in the transport direction.

7. Arrangement according to claim 6, **characterized in that** the upper transport lane (16-2, 16-3, 16-4, 16-5, 16-6, 16-7) is extended as compared to the lower transport lane (16-1, 16-2, 16-3, 16-4, 16-5, 16-6) of the at least two horizontally or essentially horizontally running transport lanes (16; 16-1, 16-2, 16-3, 16-4, 16-5, 16-6, 16-7) arranged adjacently directly on top of each other by a number of additional windows (36) that corresponds precisely to the number of windows (36) of the vertically running transport lane (20; 20-1, 20-2, 20-3) between the outbound-goods end (16") of the lower transport lane (16-1, 16-2, 16-3, 16-4, 16-5, 16-6) and the outbound-goods end (16") of the upper transport lane (16-2, 16-3, 16-4, 16-5, 16-6, 16-7), with the additional windows (36) for transport lane extension (32-2, 32-3, 32-4, 32-5, 32-6, 32-7) being placed upstream of the inbound-goods end (16') of the upper transport lane (16-2, 16-3, 16-4, 16-5, 16-6, 16-7) at which the piece of goods (12) can be taken up.

8. Arrangement according to one of claims 6 or 7, **characterized in that** the at least one vertically or essentially vertically running transport lane (20; 20-1, 20-2, 20-3) is extended by a number of additional windows (36) that corresponds precisely to the number of windows (36) of the horizontally running transport lane (16; 16-1, 16-2, 16-3, 16-4, 16-5, 16-6, 16-7) assigned to the inbound-goods end (20') of the vertical transport lane (20; 20-1, 20-2, 20-3) from its inbound-goods end (16') to its outbound-goods end (16") for transport lane extension (34-1, 34-2, 34-3), with the additional windows (36) being placed upstream of the inbound-goods end (20') of the vertically running transport lane (20; 20-1, 20-2, 20-3), to which the piece of goods (12) from the outbound-goods end (16") of the assigned horizontally running transport lane (16; 16-1, 16-2, 16-3, 16-4, 16-5, 16-6, 16-7) can be transferred.

9. Arrangement according to one of claims 1 to 8, **characterized in that** all horizontally and vertically running transport lanes (16, 20) or the windows (36) of all horizontally and vertically running transport lanes (16, 20) from the inbound-goods end of the at least two horizontally running transport lanes (16; 16-1, 16-2, 16-3, 16-4, 16-5, 16-6, 16-7) to the at least one palletising station (14) can be moved continually, in particular at the same transport speed.

10. Arrangement according to one of claims 6 to 9, **characterized in that** the windows (36) of all horizontally and vertically running transport lanes (16, 20) from the inbound-goods end (16') of the at least two horizontally running transport lanes (16; 16-1, 16-2, 16-3, 16-4, 16-5, 16-6, 16-7) to the at least one palletising station (14) have a window length that can be adjusted from a cycle length and the transport speed.

11. Arrangement according to claim 10, **characterized in that** the windows (36) have a window length of about 0.1 to 10.0 m, in particular of about 1.0 to 3.0 m, and preferably of about 1.5 m.

12. Arrangement according to one of claims 6 to 11, **characterized in that** all horizontally and vertically running transport lanes (16, 20) can be controlled by a facility for controlling, generating a cycle and a cycle number as well as assignment of the cycle number to each window (36), by which each window (36) of all horizontally and vertically running transport lanes (16, 20) from the inbound-goods end (16') of the at least two horizontally running transport lanes (16; 16-1, 16-2, 16-3, 16-4, 16-5, 16-6, 16-7) to the at least one palletising station (14) can becustomised.

13. Arrangement according to one of claims 6 to 12, **characterized in that** all horizontally and vertically running transport lanes (16, 20) have a facility for cycle counting assigned by which the cycle number of each window (36) of all horizontally and vertically running transport lanes (16, 20) from the inbound-goods end (16') of the at least two horizontally running transport lanes (16; 16-1, 16-2, 16-3, 16-4, 16-5, 16-6, 16-7) to the at least one palletising station (14) can be identified.

14. Arrangement according to one of claims 1 to 13, **characterized in that** the at least two horizontally or essentially horizontally running transport lanes (16; 16-1, 16-2, 16-3, 16-4, 16-5, 16-6, 16-7) arranged on top of each other are divided in sections into two or several transport lane segments (22), in particular into blocks (24; 24-1, 24-2, 24-3, 24-4) or rows.

15. Arrangement according to one of claims 1 to 14, **characterized in that** at least one or two further horizontally or essentially horizontally running transport lane/s (16) arranged on top of each other are arranged next to the at least two horizontally or essentially horizontally running transport lanes (16; 16-1, 16-2, 16-3, 16-4, 16-5, 16-6, 16-7) arranged on top of each other and can be combined with the at least two horizontally running transport lanes (16; 16-1, 16-2, 16-3, 16-4, 16-5, 16-6, 16-7) arranged on top of each other.

16. Arrangement according to claim 14 or 15, **characterized in that** the two or several transport lane segments (22) and/or the at least one or two further horizontally running transport lane/s (16) arranged on top of each other can be extended by a combination lane extension (46; 46-1, 46-2, 46-3, 46-4) with a length that corresponds to the length between the storage area (26) of the transport lane segments (22) or the further transport lane/s (16) and the combination (44), or by a number of additional windows (36) that corresponds precisely to the number of windows (36) between the storage area (26) of the transport lane segments (22) or the further horizontally running transport lane/s (16) and the combination (44), with the combination lane extension (46; 46-1, 46-2, 46-3, 46-4) being placed upstream of the inbound-goods end (16') of the transport lane segment/s (22) and/or the further horizontally running transport lane/s (16) on which the piece of goods (12) can be taken up.

17. Arrangement according to one of claims 6 to 16, **characterized in that** all horizontally and vertically running transport lanes (16, 20) are assigned a facility to verify the cycle number of each window (36), which compares the cycle number of each window (36) at the inbound-goods end (16') of the horizontally running transport lanes (16; 16-1, 16-2, 16-3, 16-4, 16-5, 16-6, 16-7) to the cycle number of the transport lane segments (22) and/or of the at least one or two further horizontally running transport lane/s (16) in the area of their combination (44) and/or at the outbound-goods end (16") of the horizontal transport lanes (16; 16-1, 16-2, 16-3, 16-4, 16-5, 16-6, 16-7) to the cycle number of each window (36) at the inbound-goods end (20') of the at least one vertical transport lane (20; 20-1, 20-2, 20-3).

18. Arrangement according to one of claims 1 to 17, **characterized in that** the at least two essentially horizontally running transport lanes (16; 16-1, 16-2, 16-3, 16-4, 16-5, 16-6, 16-7) are arranged with an inclination at an angle of up to about 15°, in particular between about 2° and 10°, and preferably between about 3° and 7°, from their inbound-goods end (16') to their outbound-goods end (16'').

19. Arrangement according to one of claims 1 to 18, **characterized in that** each palletising station (14) has at least one vertically running transport lane (20; 20-1, 20-2, 20-3) assigned.

20. Arrangement according to one of claims 1 to 19, **characterized in that** the at least two horizontally running transport lanes (16; 16-1, 16-2, 16-3, 16-4, 16-5, 16-6, 16-7) are formed as a, in particular partially driven, roller track conveyor device and/or the at least one vertically running transport lane (20; 20-1, 20-2, 20-3) is formed as a linear lift transport device and/or spiral or screw conveyor device.

21. Method for picking and provision of goods (12) in the correct sequence, in particular of cubic piece goods, such as containers, cartons or (beverage) crates, to at least one or in at least one palletising station (14), in particular for use of a device according to one of claims 1 to 20, with the goods (12) being taken up separately at an inbound-goods end (16') of at least two horizontally running transport lanes (16; 16-1, 16-2, 16-3, 16-4, 16-5, 16-6, 16-7) arranged on top of each other and moved to an outbound-goods end (16") of the at least two horizontally running transport lanes (16; 16-1, 16-2, 16-3, 16-4, 16-5, 16-6, 16-7), **characterized in that** the goods (12) are handed over from the outbound-goods end (16") of the at least two horizontally running transport lanes (16; 16-1, 16-2, 16-3, 16-4, 16-5, 16-6, 16-7) for vertical movement upwards in the transport direction (40) to an inbound-goods end (20') of at least one vertically running transport lane (20; 20-1, 20-2, 20-3), combined by the at least two horizontally running transport lanes (16; 16-1, 16-2, 16-3, 16-4, 16-5, 16-6, 16-7) and moved vertically upwards in the transport direction (40) to the assigned palletising station (14) by the at least one vertically running transport lane (20; 20-1, 20-2, 20-3) to an outbound-goods end (20") of the at least one vertically running transport lane (20; 20-1, 20-2, 20-3) that is assigned to the one palletising station (14) or one of the palletising stations (14), and transferred to the palletising station (14), with all horizontally or essentially horizontally running transport lanes (16; 16-1, 16-2, 16-3, 16-4, 16-5, 16-6, 16-7) and the at least one vertically or essentially vertically running transport lane (20; 20-1, 20-2, 20-3) being formed in such a way that the path of a piece of goods (12) from the inbound-goods end (16') of each of the at least two horizontally running transport lanes (16; 16-1, 16-2, 16-3, 16-4, 16-5, 16-6, 16-7) to the outbound goods end (20") of one of the at least one vertically running transport lane (20; 20-1, 20-2, 20-3) of the assigned palletising station (14) being of the same length.

22. Method according to claim 21, **characterized in that** the at least two horizontally or essentially horizontally running transport lanes (16; 16-1, 16-2, 16-3, 16-4, 16-5, 16-6, 16-7) and the at least one vertically or essentially vertically running transport lane (20; 20-1, 20-2, 20-3) are divided into windows (36) of the same number, intended for taking up one respective piece of goods (12) and continually movable in the transport direction.

23. Method according to claim 22, **characterized in that** the upper transport lane (16-2, 16-3, 16-4, 16-5, 16-6, 16-7) is extended by a number of additional windows (36) that corresponds precisely to the number of windows (36) of the vertically running transport lane (20; 20-1, 20-2, 20-3) between the outbound-goods end (16") of the lower transport lane (16-1, 16-2, 16-3, 16-4, 16-5, 16-6) and the outbound-goods end (16") of the upper transport lane (16-2, 16-3, 16-4, 16-5, 16-6, 16-7) as compared to the lower transport lane (16-1, 16-2, 16-3, 16-4, 16-5, 16-6) of the at least two horizontally or essentially horizontally running transport lanes (16; 16-1, 16-2, 16-3, 16-4, 16-5, 16-6, 16-7) arranged adjacently directly on top of each, with the additional windows (36) being placed upstream of the inbound-goods end of the upper transport lane (16-2, 16-3, 16-4, 16-5, 16-6, 16-7) at which the piece of goods (12) is taken up.

24. Method according to claim 22 or 23, **characterized in that** the at least one vertically or essentially vertically running transport lane (20; 20-1, 20-2, 20-3) is extended by a number of additional windows (36) that corresponds precisely to the number of windows (36) of the horizontally or essentially horizontally running transport lane (16; 16-1, 16-2, 16-3, 16-4, 16-5, 16-6, 16-7) that is assigned to the inbound-goods end (20') of the vertical transport lane (20; 20-1, 20-2, 20-3) from their inbound-goods end (16') to their outbound-goods end (16''), with the additional windows (36) being placed upstream of the inbound-goods end (20') of the vertically running transport lane (20; 20-1, 20-2, 20-3) to which the piece of goods (12) is handed over by the outbound-goods end (16") of the assigned horizontally or essentially horizontally running transport lane (16; 16-1, 16-2, 16-3, 16-4, 16-5, 16-6, 16-7).

25. Method according to one of claims 21 to 24, **characterized in that** all horizontally and vertically running transport lanes (16, 20) or the windows (36) of all horizontally and vertically running transport lanes (16, 20) are moved continually from the inbound-goods end (16') of the at least two horizontally running transport lanes (16; 16-1, 16-2, 16-3, 16-4, 16-5, 16-6, 16-7) to the at least one palletising station (14), in particular at the same transport speed.

26. Method according to one of claims 22 to 25, **characterized in that** the windows (36) of all horizontally and vertically running transport lanes (16, 20) from the inbound-goods end (16') of the at least two horizontally running transport lanes (16; 16-1, 16-2, 16-3, 16-4, 16-5, 16-6, 16-7) to the at least one palletising station (14) are assigned a window length that is adjusted with a cycle length and the transport speed.

27. Method according to claim 26, **characterized in that** the windows (36) are applied with a window length of about 0.1 to 10.0 m, in particular of about 1.0 to 3.0 m, and preferably of about 1.5 m.

28. Method according to one of claims 22 to 27, **characterized in that** all horizontally and vertically running transport lanes (16, 20) are controlled by a facility for controlling, generating a cycle and a cycle number as well as assignment of the cycle number to each window (36), by which each window (36) of all horizontally and vertically running transport lanes from the inbound-goods end (16') of the at least two horizontally running transport lanes (16; 16-1, 16-2, 16-3, 16-4, 16-5, 16-6, 16-7) to the at least one palletising station (14) is individualized.

29. Method according to one of claims 22 to 28, **characterized in that** the cycle number of each window (36) of all horizontally and vertically running transport lanes (16, 20) from the inbound-goods end (16') of the at least two horizontally running transport lanes (16; 16-1, 16-2, 16-3, 16-4, 16-5, 16-6, 16-7) to the at least one palletising station (14) is identified by a facility for cycle counting.

30. Method according to one of claims 21 to 29, **characterized in that** the at least two horizontally running transport lanes (16; 16-1, 16-2, 16-3, 16-4, 16-5, 16-6, 16-7) are divided in sections in two or several transport lane segments (22), in particular in blocks (24; 24-1, 24-2, 24-3, 24-4) or rows.

31. Method according to one of claims 21 to 30, **characterized in that** at least one or two further transport lane/s (16) running horizontally or essentially horizontally and arranged on top of each other is/are arranged next to the at least two horizontally running transport lanes (16; 16-1, 16-2, 16-3, 16-4, 16-5, 16-6, 16-7) and combined with the at least two horizontally running transport lanes (16; 16-1, 16-2, 16-3, 16-4, 16-5, 16-6, 16-7).

32. Method according to claim 30 or 31, **characterized in that** the two or several transport lane segments (22) and/or the at least one or two further horizontally running transport lane/s (16) arranged on top of each other is/are extended by a combination lane extension (46; 46-1, 46-2, 46-3, 46-4) with a length that corresponds to the length between the storage area (26) of the transport lane segments (22) or the further transport lane/s (16) and the combination (44), or by a number of additional windows (36) that corresponds precisely to the number of windows (36) between the storage area (26) of the transport lane segments (22) or the further horizontally running transport lane/s (16) and the combination (44), with the combination lane extension (46; 46-1, 46-2, 46-3, 46-4) being placed upstream of the inbound-goods end (16') of the transport lane segment/s (22) and/or the further horizontally running transport lane/s (16) on which the piece of goods (12) can be taken up.

33. Method according to one of claims 21 to 32, **characterized in that** the cycle number of each window (36) at the inbound-goods end (16') of the horizontally running transport lanes (16; 16-1, 16-2, 16-3, 16-4, 16-5, 16-6, 16-7) is compared to the cycle number of the transport lane segments (22) and/or the at least one or two further horizontally running transport lane/s in the area of their combination (44) and/or at the outbound-goods end (16") of the horizontal transport lanes (16; 16-1, 16-2, 16-3, 16-4, 16-5, 16-6, 16-7) to the cycle number of each window (36) at the inbound-goods end (20') of the at least one vertical transport lane (20; 20-1, 20-2, 20-3) by a facility to verify the cycle number of each window (36).

34. Computer program for picking and provision of goods (12) in the correct sequence, with the program causing a computer such that the arrangement according to one of claims 1 to 20 executes the steps of method according to one of claims 21 to 33 when the program is executed on the computer.

## Revendications

1. Agencement comportant un dispositif (10) pour le commissionnement et la préparation de marchandises (12) dans un ordre correct, en particulier de pièces de forme parallélépipédique, telles que des récipients, des cartons ou des caisses (de boisson), comportant au moins un poste de palettisation (14) pourvu d'au moins deux voies de transport (16; 16-1, 16-2, 16-3, 16-4, 16-5, 16-6, 16-7) s'étendant horizontalement ou sensiblement horizontalement et superposées, qui permettent de recevoir les marchandises (12) de façon individualisée à une extrémité (16') côté entrée de marchandises desdites au moins deux voies de transport horizontales (16; 16-1, 16-2, 16-3, 16-4, 16-5, 16-6, 16-7) et qui sont mobiles vers une extrémité (16") côté sortie de marchandises desdites au moins deux voies de transport horizontales (16; 16-1, 16-2, 16-3, 16-4, 16-5, 16-6, 16-7), **caractérisé par** au moins une voie de transport (20; 20-1, 20-2, 20-3) s'étendant verticalement ou sensiblement verticalement à laquelle les marchandises (12) peuvent être remises pour les déplacer verticalement vers le haut en direction de convoyage (40) depuis l'extrémité (16'') côté sortie de marchandises desdites au moins deux voies de transport horizontales (16; 16-1, 16-2, 16-3, 16-4, 16-5, 16-6, 16-7) vers une extrémité (20') côté entrée de marchandises de ladite au moins une voie de transport verticale (20; 20-1, 20-2, 20-3), laquelle permet de regrouper les marchandises (12) desdites au moins deux voies de transport horizontales (16; 16-1, 16-2, 16-3, 16-4, 16-5, 16-6, 16-7) et de les déplacer depuis ladite au moins une voie de transport verticale (20; 20-1, 20-2, 20-3) vers une extrémité (20") côté sortie de marchandises de ladite au moins une voie de transport verticale (20; 20-1, 20-2, 20-3), associée audit poste de palettisation (14) ou à l'un des postes de palettisation (14), verticalement vers le haut en direction de convoyage (40) jusqu'au poste de palettisation associé (14), et laquelle permet de les remettre au poste de palettisation (14), dans lequel toutes les voies de transport horizontales ou sensiblement horizontales (16; 16-1, 16-2, 16-3, 16-4, 16-5, 16-6, 16-7) et ladite au moins une voie de transport verticale ou sensiblement verticale (20; 20-1, 20-2, 20-3) étant réalisées de telle sorte que le chemin d'une marchandise (12) depuis l'extrémité (16') côté entrée de marchandises de chacune desdites au moins deux voies de transport horizontales (16; 16-1, 16-2, 16-3, 16-4, 16-5, 16-6, 16-7) jusqu'à l'extrémité (20") côté sortie de marchandises de l'une au moins de ladite au moins une voie de transport verticale (20; 20-1, 20-2, 20-3) du poste de palettisation associé (14) est de même longueur.

2. Agencement selon la revendication 1, **caractérisé en ce que** lesdites au moins deux voies de transport horizontales ou sensiblement horizontales (16; 16-1, 16-2, 16-3, 16-4, 16-5, 16-6, 16-7) et ladite au moins une voie de transport verticale ou sensiblement verticale (20; 20-1, 20-2, 20-3) sont prolongées par aménagement structurel.

3. Agencement selon la revendication 1 ou 2, **caractérisé en ce que** la voie de transport supérieure (16-2, 16-3, 16-4, 16-5, 16-6, 16-7) est prolongée par rapport à la voie de transport inférieure (16-1, 16-2, 16-3, 16-4, 16-5, 16-6) desdites au moins deux voies de transport horizontales ou sensiblement horizontales (16; 16-1, 16-2, 16-3, 16-4, 16-5, 16-6, 16-7) agencées directement au voisinage les unes au-dessus des autres, à savoir d'un prolongement de voie de transport (32-2, 32-3, 32-4, 32-5, 32-6, 32-7) d'une longueur qui correspond à la longueur de la voie de transport verticale (20; 20-1, 20-2, 20-3) entre l'extrémité (16") côté sortie de marchandises de la voie de transport inférieure (16-1, 16-2, 16-3, 16-4, 16-5, 16-6) et l'extrémité (16") côté sortie de marchandises de la voie de transport supérieure (16-2, 16-3, 16-4, 16-5, 16-6, 16-7), dans lequel le prolongement de voie de transport (32-2, 32-3, 32-4, 32-5, 32-6, 32-7) est agencé en amont de l'extrémité (16') côté entrée de marchandises de la voie de transport supérieure (16-2, 16-3, 16-4, 16-5, 16-6, 16-7), extrémité qui permet de recevoir la marchandise (12).

4. Agencement selon l'une des revendications 1 à 3, **caractérisé en ce que** ladite au moins une voie de transport verticale ou sensiblement verticale (20; 20-1, 20-2, 20-3) est prolongée d'un prolongement de voie de transport (34-1, 34-2, 34-3) d'une longueur qui correspond à la longueur de la voie de transport horizontale ou sensiblement horizontale (16; 16-1, 16-2, 16-3, 16-4, 16-5, 16-6, 16-7), associée à l'extrémité (20') côté entrée de marchandises de la voie de transport verticale (20; 20-1, 20-2, 20-3), depuis son extrémité (16') côté entrée de marchandises jusqu'à son extrémité (16'') côté sortie de marchandises, dans lequel le prolongement de voie de transport (34-1, 34-2, 34-3) est agencé en amont de l'extrémité (20') côté entrée de marchandises de la voie de transport verticale, extrémité à laquelle la marchandise (12) peut être remise depuis l'extrémité (16") côté sortie de marchandises de la voie de transport horizontale associée (16; 16-1, 16-2, 16-3, 16-4, 16-5, 16-6, 16-7).

5. Agencement selon la revendication 1, **caractérisé en ce que** lesdites au moins deux voies de transport horizontales ou sensiblement horizontales (16; 16-1, 16-2, 16-3, 16-4, 16-5, 16-6, 16-7) et lesdites au moins deux ou plusieurs voies de transport verticales ou sensiblement verticales (20; 20-1, 20-2, 20-3) sont réalisées chacune avec une structure au moins sensiblement égale et peuvent être prolongées par un moyen de simulation en particulier assisté par ordinateur.

6. Agencement selon l'une des revendications 1 à 5, **caractérisé en ce que** lesdites au moins deux voies de transport horizontales ou sensiblement horizontales (16; 16-1, 16-2, 16-3, 16-4, 16-5, 16-6, 16-7) et ladite au moins une voie de transport verticale ou sensiblement verticale (20; 20-1, 20-2, 20-3) sont subdivisées en un même nombre de fenêtres (36) prévues pour recevoir chacune une marchandise (12) et mobiles en continu en direction de convoyage.

7. Agencement selon la revendication 6, **caractérisé en ce que** la voie de transport supérieure (16-2, 16-3, 16-4, 16-5, 16-6, 16-7) est prolongée par rapport à la voie de transport inférieure (16-1, 16-2, 16-3, 16-4, 16-5, 16-6) desdites au moins deux voies de transport horizontales ou sensiblement horizontales (16; 16-1, 16-2, 16-3, 16-4, 16-5, 16-6, 16-7) agencées directement au voisinage les unes au-dessus des autres, à savoir d'un nombre de fenêtres (36) supplémentaires qui correspond exactement au nombre de fenêtres (36) de la voie de transport verticale (20; 20-1, 20-2, 20-3) entre l'extrémité (16") côté sortie de marchandises de la voie de transport inférieure (16-1, 16-2, 16-3, 16-4, 16-5, 16-6) et l'extrémité (16") côté sortie de marchandises de la voie de transport supérieure (16-2, 16-3, 16-4, 16-5, 16-6, 16-7), dans lequel, en vue de prolonger la voie de transport (32-2, 32-3, 32-4, 32-5, 32-6, 32-7), les fenêtres (36) supplémentaires sont agencées en amont de l'extrémité (16') côté entrée de marchandises de la voie de transport supérieure (16-2, 16-3, 16-4, 16-5, 16-6, 16-7), extrémité qui permet de recevoir la marchandise (12).

8. Agencement selon l'une des revendications 6 ou 7, **caractérisé en ce que** en vue du prolongement de la voie de transport (34-1, 34-2, 34-3), ladite au moins une voie de transport verticale ou sensiblement verticale (20; 20-1, 20-2, 20-3) est prolongée d'un nombre de fenêtres (36) supplémentaires qui correspond exactement au nombre de fenêtres (36) de la voie de transport horizontale (16; 16-1, 16-2, 16-3, 16-4, 16-5, 16-6, 16-7) qui est associée à l'extrémité (20') côté entrée de marchandises de la voie de transport verticale (20; 20-1, 20-2, 20-3), depuis son extrémité (16') côté entrée de marchandises jusqu'à son extrémité (16") côté sortie de marchandises, dans lequel les fenêtres supplémentaires (36) sont agencées en amont de l'extrémité (20') côté entrée de marchandises de la voie de transport verticale (20; 20-1, 20-2, 20-3) à laquelle la marchandise (12) peut être remise depuis l'extrémité (16") côté sortie de marchandises de la voie de transport horizontale associée (16; 16-1, 16-2, 16-3, 16-4, 16-5, 16-6, 16-7) .

9. Agencement selon l'une des revendications 1 à 8, **caractérisé en ce que** toutes les voies de transport horizontales et verticales (16, 20) ou les fenêtres (36) de toutes les voies de transport horizontales et verticales (16, 20) sont mobiles en continu, en particulier à la même vitesse de convoyage, depuis l'extrémité côté entrée de marchandises desdites au moins deux voies de transport horizontales (16; 16-1, 16-2, 16-3, 16-4, 16-5, 16-6, 16-7) jusqu'audit au moins un poste de palettisation (14).

10. Agencement selon l'une des revendications 6 à 9, **caractérisé en ce que** depuis l'extrémité (16') côté entrée de marchandises desdites au moins deux voies de transport horizontales (16; 16-1, 16-2, 16-3, 16-4, 16-5, 16-6, 16-7) jusqu'audit au moins un poste de palettisation (14), les fenêtres (36) de toutes les voies de transport horizontales et verticales (16, 20) présentent une longueur de fenêtre qui est réglable à partir d'une longueur de cycle et de la vitesse de convoyage.

11. Agencement selon la revendication 10, **caractérisé en ce que** les fenêtres (36) présentent une longueur de fenêtre d'environ 0,1 à 10,0 m, en particulier d'environ 1,0 à 3,0 m, et de préférence d'environ 1,5 m.

12. Agencement selon l'une des revendications 6 à 11, **caractérisé en ce que** toutes les voies de transport horizontales et verticales (16, 20) peuvent être commandées par un moyen de commande, de génération d'un cycle et d'un numéro de cycle ainsi que par attribution du numéro de cycle à chaque fenêtre (36), par lequel chaque fenêtre (36) de toutes les voies de transport horizontales et verticales (16, 20) peut être individualisée depuis l'extrémité (16') côté entrée de marchandises desdites au moins deux voies de transport horizontales (16; 16-1, 16-2, 16-3, 16-4, 16-5, 16-6, 16-7) jusqu'audit au moins un poste de palettisation (14).

13. Agencement selon l'une des revendications 6 à 12, **caractérisé en ce que** à toutes les voies de transport horizontales et verticales (16, 20) est associé un moyen de comptage de cycle qui permet d'identifier le numéro de cycle de chaque fenêtre (36) de toutes les voies de transport horizontales et verticales (16, 20) depuis l'extrémité (16') côté entrée de marchandises desdites au moins deux voies de transport horizontales (16; 16-1, 16-2, 16-3, 16-4, 16-5, 16-6, 16-7) jusqu'audit au moins un poste de palettisation (14).

14. Agencement selon l'une des revendications 1 à 13, **caractérisé en ce que** lesdites au moins deux voies de transport horizontales ou sensiblement horizontales et superposées (16; 16-1, 16-2, 16-3, 16-4, 16-5, 16-6, 16-7) sont subdivisées par portion en deux ou en plusieurs segments (22) de voie de transport, en particulier en blocs (24; 24-1, 24-2, 24-3, 24-4) ou en rangées.

15. Agencement selon l'une des revendications 1 à 14, **caractérisé en ce qu'**au moins une ou deux autres voie(s) de transport horizontales ou sensiblement horizontales et superposées (16) sont agencées à côté desdites au moins deux voies de transport horizontales ou sensiblement horizontales et superposées (16; 16-1, 16-2, 16-3, 16-4, 16-5, 16-6, 16-7) et peut/peuvent être regroupée(s) avec lesdites au moins deux voies de transport horizontales ou sensiblement horizontales et superposées (16; 16-1, 16-2, 16-3, 16-4, 16-5, 16-6, 16-7).

16. Agencement selon la revendication 14 ou 15, **caractérisé en ce que** les deux ou plusieurs segments (22) de voie de transport et/ou ladite au moins une ou lesdites au moins deux autres voies de transport horizontales et superposées (16) peuvent être prolongées d'un prolongement de voie de regroupement (46; 46-1, 46-2, 46-3, 46-4) d'une longueur qui correspond à la longueur entre la zone de stockage (26) des segments (22) de voie de transport ou de la ou des autres voie(s) de transport (16) et le regroupement (44), ou bien d'un nombre de fenêtres (36) supplémentaires qui correspond exactement au nombre de fenêtres (36) entre la zone de stockage (26) des segments (22) de voie de transport ou de la ou des autres voie(s) de transport horizontales (16) et le regroupement (44), dans lequel le prolongement de voie de regroupement (46; 46-1, 46-2, 46-3, 46-4) est agencé en amont de l'extrémité (16') côté entrée de marchandises du ou des segments (22) de voie de transport et/ou de la ou des autres voie(s) de transport horizontales (16), extrémité qui permet de recevoir la marchandise (12).

17. Agencement selon l'une des revendications 6 à 16, **caractérisé en ce que** à toutes les voies de transport horizontales et verticales (16, 20) est associé un moyen de vérification du numéro de cycle de chaque fenêtre (36), qui compare le numéro de cycle de chaque fenêtre (36) à l'extrémité (16') côté entrée de marchandises des voies de transport horizontales (16; 16-1, 16-2, 16-3, 16-4, 16-5, 16-6, 16-7) avec le numéro de cycle des segments (22) de voie de transport et/ou de ladite au moins une ou desdites au moins deux autres voies de transport horizontales (16) dans la zone de leur regroupement (44) et/ou à l'extrémité (16") côté sortie de marchandises des voies de transport horizontales (16; 16-1, 16-2, 16-3, 16-4, 16-5, 16-6, 16-7) avec le numéro de cycle de chaque fenêtre (36) à l'extrémité (20') côté entrée de marchandises de ladite au moins une voie de transport verticale (20; 20-1, 20-2, 20-3).

18. Agencement selon l'une des revendications 1 à 17, **caractérisé en ce que** lesdites au moins deux voies de transport sensiblement horizontales (16; 16-1, 16-2, 16-3, 16-4, 16-5, 16-6, 16-7) sont agencées sous une inclinaison d'un angle allant jusqu'à environ 15°, en particulier compris entre 2° et 10°, de préférence entre environ 3° et 7°, depuis leur extrémité (16') côté entrée de marchandises jusqu'à leur extrémité (16") côté sortie de marchandises.

19. Agencement selon l'une des revendications 1 à 18, **caractérisé en ce que** à chaque poste de palettisation (14) est associée au moins une voie de transport verticale (20; 20-1, 20-2, 20-3).

20. Agencement selon l'une des revendications 1 à 19, **caractérisé en ce que** lesdites au moins deux voies de transport horizontales (16; 16-1, 16-2, 16-3, 16-4, 16-5, 16-6, 16-7) sont réalisées sous forme de moyen de convoyage avec voie à rouleaux, qui est en particulier entraîné partiellement, et/ou ladite au moins une voie de transport verticale (20; 20-1, 20-2, 20-3) est réalisée sous forme de moyen de convoyage avec élévateur linéaire et/ou sous forme de moyen de convoyage hélicoïdal ou à vis.

21. Procédé pour le commissionnement et la préparation de marchandises (12) dans un ordre correct, en particulier de pièces de forme parallélépipédique, telles que des récipients, des cartons ou des caisses (de boisson), jusqu'à au moins ou sur au moins un poste de palettisation (14), en particulier pour l'utilisation d'un agencement selon l'une des revendications 1 à 20, dans lequel les marchandises (12) sont reçues de façon individualisée à une extrémité (16') côté entrée de marchandises par au moins deux voies de transport horizontales et superposées (16; 16-1, 16-2, 16-3, 16-4, 16-5, 16-6, 16-7) et sont déplacées jusqu'à une extrémité (16") côté sortie de marchandises desdites au moins deux voies de transport horizontales (16; 16-1, 16-2, 16-3, 16-4, 16-5, 16-6, 16-7), **caractérisé en ce que** pour le mouvement verticalement vers le haut en direction de convoyage (40), les marchandises (12) sont remises depuis l'extrémité (16") côté sortie de marchandises desdites au moins deux voies de transport horizontales (16; 16-1, 16-2, 16-3, 16-4, 16-5, 16-6, 16-7) à une extrémité (20') côté entrée de marchandises d'au moins une voie de transport verticale (20; 20-1, 20-2, 20-3), elles sont regroupées par lesdites aux moins deux voies de transport horizontales (16; 16-1, 16-2, 16-3, 16-4, 16-5, 16-6, 16-7) et elles sont déplacées par ladite au moins une voie de transport verticale (20; 20-1, 20-2, 20-3) jusqu'à une extrémité (20") côté sortie de marchandises de ladite au moins une voie de transport verticale (20; 20-1, 20-2, 20-3), extrémité qui est associée audit poste de palettisation (14) ou à l'un des postes de palettisation (14), verticalement vers le haut en direction de convoyage (40) jusqu'au poste de palettisation associé (14) et elles sont remises au poste de palettisation (14), dans lequel toutes les voies de transport horizontales ou sensiblement horizontales (16; 16-1, 16-2, 16-3, 16-4, 16-5, 16-6, 16-7) et ladite au moins une voie de transport verticale ou sensiblement verticale (20; 20-1, 20-2, 20-3) sont réalisées de telle sorte que le chemin d'une marchandise (12) depuis l'extrémité (16') côté entrée de marchandises de chacune desdites au moins deux voies de transport horizontales (16; 16-1, 16-2, 16-3, 16-4, 16-5, 16-6, 16-7) jusqu'à l'extrémité (20") côté sortie de marchandises de l'une de ladite au moins une voie de transport verticale (20; 20-1, 20-1, 20-2, 20-3) du poste de palettisation associé (14) est de longueur égale.

22. Procédé selon la revendication 21, **caractérisé en ce que** lesdites au moins deux voies de transport horizontales ou sensiblement horizontales (16; 16-1, 16-2, 16-3, 16-4, 16-5, 16-6, 16-7) et ladite au moins une voie de transport verticale ou sensiblement verticale (20; 20-1, 20-2, 20-3) sont subdivisées en fenêtres (36) de nombre égal prévues pour recevoir chacune une marchandise (12) et mobiles en continu en direction de convoyage.

23. Procédé selon la revendication 22, **caractérisé en ce que** la voie de transport supérieure (16-2, 16-3, 16-4, 16-5, 16-6, 16-7) est prolongée par rapport à la voie de transport inférieure (16-1, 16-2, 16-3, 16-4, 16-5, 16-6) desdites au moins deux voies de transport horizontales ou sensiblement horizontales (16; 16-1, 16-2, 16-3, 16-4, 16-5, 16-6, 16-7) agencées directement au voisinage les unes au-dessus des autres, à savoir d'un nombre de fenêtres (36) supplémentaires qui correspond exactement au nombre de fenêtres (36) de la voie de transport verticale (20; 20-1, 20-2, 20-3) entre l'extrémité (16") côté sortie de marchandises de la voie de transport inférieure (16-1, 16-2, 16-3, 16-4, 16-5, 16-6) et l'extrémité (16") côté sortie de marchandises de la voie de transport supérieure (16-2, 16-3, 16-4, 16-5, 16-6, 16-7), les fenêtres (36) supplémentaires étant agencées en amont de l'extrémité côté entrée de marchandises de la voie de transport supérieure (16-2, 16-3, 16-4, 16-5, 16-6, 16-7), extrémité à laquelle les marchandises (12) sont reçues.

24. Procédé selon la revendication 22 ou 23, **caractérisé en ce que** ladite au moins une voie de transport verticale ou sensiblement verticale (20; 20-1, 20-2, 20-3) est prolongée d'un nombre de fenêtres (36) supplémentaires qui correspond exactement au nombre de fenêtres (36) de la voie de transport horizontale ou sensiblement horizontale (16; 16-1, 16-2, 16-3, 16-4, 16-5, 16-6, 16-7), qui est associée à l'extrémité (20') côté entrée de marchandises de la voie de transport verticale (20; 20-1, 20-2, 20-3), depuis son extrémité (16') côté entrée de marchandises jusqu'à son extrémité (16") côté sortie de marchandises, dans lequel les fenêtres (36) supplémentaires sont agencées en amont de l'extrémité (20') côté entrée de marchandises de la voie de transport verticale (20; 20-1, 20-2, 20-3), extrémité à laquelle la marchandise (12) est remise depuis l'extrémité (16") côté sortie de marchandises de la voie de transport horizontale ou sensiblement horizontale associée (16; 16-1, 16-2, 16-3, 16-4, 16-5, 16-6, 16-7).

25. Procédé selon l'une des revendications 21 à 24, **caractérisé en ce que** toutes les voies de transport horizontales et verticales (16, 20) ou les fenêtres (36) de toutes les voies de transport horizontales et verticales (16, 20) sont déplacées en continu, en particulier à la même vitesse de convoyage, depuis l'extrémité (16') côté entrée de marchandises desdites au moins deux voies de transport horizontales (16; 16-1, 16-2, 16-3, 16-4, 16-5, 16-6, 16-7) jusqu'audit au moins un poste de palettisation (14).

26. Procédé selon l'une des revendications 22 à 25, **caractérisé en ce que** depuis l'extrémité (16') côté entrée de marchandises desdites au moins deux voies de transport horizontales (16; 16-1, 16-2, 16-3, 16-4, 16-5, 16-6, 16-7) jusqu'audit au moins un poste de palettisation (14), les fenêtres (36) de toutes les voies de transport horizontales et verticales (16, 20) sont munies d'une longueur de fenêtre qui est réglée à partir d'une longueur de cycle et de la vitesse de convoyage.

27. Procédé selon la revendication 26, **caractérisé en ce que** les fenêtres (36) sont pourvues d'une longueur de fenêtre d'environ 0,1 à 10,0 m, en particulier d'environ 1,0 à 3,0 m, et de préférence d'environ 1,5 m.

28. Procédé selon l'une des revendications 22 à 27, **caractérisé en ce que** toutes les voies de transport horizontales et verticales (16, 20) sont commandées par un moyen de commande, de génération d'un cycle et d'un numéro de cycle ainsi que par attribution du numéro de cycle à chaque fenêtre (36), par lequel chaque fenêtre (36) de toutes les voies de transport horizontales et verticales est individualisée depuis l'extrémité (16') côté entrée de marchandises desdites au moins deux voies de transport horizontales (16; 16-1, 16-2, 16-3, 16-4, 16-5, 16-6, 16-7) jusqu'audit au moins un poste de palettisation (14).

29. Procédé selon l'une des revendications 22 à 28, **caractérisé en ce que** le numéro de cycle de chaque fenêtre (36) de toutes les voies de transport horizontales et verticales (16, 20) est identifié par un moyen de comptage de cycle depuis l'extrémité (16') côté entrée de marchandises desdites au moins deux voies de transport horizontales (16; 16-1, 16-2, 16-3, 16-4, 16-5, 16-6, 16-7) jusqu'audit au moins un poste de palettisation (14).

30. Procédé selon l'une des revendications 21 à 29, **caractérisé en ce que** lesdites au moins deux voies de transport horizontales (16; 16-1, 16-2, 16-3, 16-4, 16-5, 16-6, 16-7) sont subdivisées par portion en deux ou en plusieurs segments (22) de voie de transport, en particulier en blocs (24; 24-1, 24-2, 24-3, 24-4) ou en rangées.

31. Procédé selon l'une des revendications 21 à 30, **caractérisé en ce que** au moins une ou deux autres voie(s) de transport s'étendant horizontalement ou sensiblement horizontalement et superposées (16) sont agencées à côté desdites au moins deux voies de transport horizontales (16; 16-1, 16-2, 16-3, 16-4, 16-5, 16-6, 16-7) et peut/peuvent être regroupée(s) avec lesdites au moins deux voies de transport horizontales (16; 16-1, 16-2, 16-3, 16-4, 16-5, 16-6, 16-7).

32. Procédé selon la revendication 30 ou 31, **caractérisé en ce que** les deux ou plusieurs segments (22) de voie de transport et/ou ladite au moins une ou lesdites au moins deux autres voies de transport horizontales et superposées (16) peuvent être prolongé(e)s d'un prolongement de voie de regroupement (46; 46-1, 46-2, 46-3, 46-4) d'une longueur qui correspond à la longueur entre la zone de stockage (26) des segments (22) de voie de transport ou de la ou des autres voie(s) de transport (16) et le regroupement (44), ou bien d'un nombre de fenêtres (36) supplémentaires qui correspond exactement au nombre de fenêtres (36) entre la zone de stockage (26) des segments (22) de voie de transport ou de la ou des autres voie(s) de transport horizontales (16) et le regroupement (44), dans lequel le prolongement de voie de regroupement (46; 46-1, 46-2, 46-3, 46-4) est agencé en amont de l'extrémité (16') côté entrée de marchandises du ou des segments (22) de voie de transport et/ou de la ou des autres voie(s) de transport horizontales (16), extrémité qui permet de recevoir la marchandise (12).

33. Procédé selon l'une des revendications 21 à 32, **caractérisé en ce que** le numéro de cycle de chaque fenêtre (36) à l'extrémité (16') côté entrée de marchandises des voies de transport horizontales (16; 16-1, 16-2, 16-3, 16-4, 16-5, 16-6, 16-7) est comparé avec le numéro de cycle des segments (22) de voie de transport et/ou de ladite au moins une ou desdites au moins deux autres voie(s) de transport horizontales dans la zone de leur regroupement (44) et/ou à l'extrémité (16") côté sortie de marchandises des voies de transport horizontales (16; 16-1, 16-2, 16-3, 16-4, 16-5, 16-6, 16-7), avec le numéro de cycle de chaque fenêtre (36) à l'extrémité (20') côté entrée de marchandises de ladite au moins une voie de transport verticale (20; 20-1, 20-2, 20-3) par un moyen de vérification du numéro de cycle de chaque fenêtre (36).

34. Produit informatique pour le commissionnement et la préparation de marchandises (12) dans un ordre correct, dans lequel le programme amène un ordinateur à exécuter des ordres, de sorte que l'agencement selon l'une des revendications 1 à 20 exécute les étapes du procédé selon l'une des revendications 21 à 33 lorsque le programme est exécuté sur l'ordinateur.
